(19) Europäisches Patentamt
European Patent Office
Office européen des brevets

(11) **EP 3 281 350 B1**

(12) **EUROPEAN PATENT SPECIFICATION**

| | | | |
|---|---|---|---|
| (45) | Date of publication and mention of the grant of the patent: **18.11.2020 Bulletin 2020/47** | (51) | Int Cl.: ***H04L 5/00*** *(2006.01)*     ***H04L 29/06*** *(2006.01)* ***H04L 27/00*** *(2006.01)* |
| (21) | Application number: **16776957.9** | (86) | International application number: **PCT/KR2016/003797** |
| (22) | Date of filing: **11.04.2016** | (87) | International publication number: **WO 2016/163854 (13.10.2016 Gazette 2016/41)** |

(54) **METHODS AND APPARATUS FOR RRM MEASUREMENT ON UNLICENSED SPECTRUM**

VERFAHREN UND VORRICHTUNG ZUR RRM-MESSUNG AUF EINEM UNLIZENZIERTEN SPEKTRUM

PROCÉDÉS ET APPAREIL POUR UNE MESURE RRM SUR BANDE DE FRÉQUENCE NON SOUMISE À LICENCE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:
**10.04.2015 US 201562146107 P**
**22.09.2015 US 201562221744 P**
**25.09.2015 US 201562232828 P**
**30.09.2015 US 201562235017 P**
**12.10.2015 US 201562240328 P**
**05.11.2015 US 201562251197 P**
**08.04.2016 US 201615094975**

(43) Date of publication of application:
**14.02.2018 Bulletin 2018/07**

(73) Proprietor: **Samsung Electronics Co., Ltd.**
**Suwon-si, Gyeonggi-do 16677 (KR)**

(72) Inventors:
• **NOVLAN, Thomas David**
  **Dallas County, Texas 75203 (US)**
• **NG, Boon Loong**
  **Dallas County, Texas 75206 (US)**

(74) Representative: **HGF**
**1 City Walk**
**Leeds LS11 9DX (GB)**

(56) References cited:
**EP-A1- 1 944 984**     **EP-A1- 3 373 628**
**WO-A1-2016/123025**     **WO-A1-2017/138870**
**US-A1- 2013 078 924**     **US-A1- 2013 336 156**

• **ZTE: 'Considerations on Measurements for LAA' R1-151022, 3GPP TSG RAN WG1 AD-HOC MEETING 18 March 2015, PARIS, FRANCE, XP050951396**
• **CATT: 'UE measurements for LAA' R1-151006, 3GPP TSG RAN WG1 AD-HOC MEETING 18 March 2015, PARIS, FRANCE, XP050951384**
• **HUAWEI ET AL.: 'RRM measurement for unlicensed carrier' R1-150981, 3GPP TSG RAN WG1 AD-HOC MEETING 17 March 2015, PARIS, FRANCE, XP050951347**

**Description**

**Technical Field**

This disclosure relates generally to wireless communication systems. More specifically, this disclosure relates to method and apparatus for RRM measurement on unlicensed spectrum.

**Background Art**

A long term evolution (LTE) radio access technology (RAT) may be deployed on an unlicensed frequency spectrum, which is also known as licensed assisted access (LAA) or LTE unlicensed (LTE-U). One of possible deployment scenarios for the LAA is to deploy LAA carriers as a part of carrier aggregations, where an LAA carrier is aggregated with another carrier on a licensed frequency spectrum.

WO2016123025 appears to disclose Radio Resource Management (RRM) based on signal strength measurements in LTE over unlicensed spectrum. EP1944984 appears to disclose an apparatus and method for saving power in a dual mode portable terminal that concurrently supports a cellular network and an unlicensed band network.

**Disclosure of Invention**

**Technical Problem**

In a conventional scheme, a carrier on a licensed frequency spectrum is assigned as a primary cell (PCell) and a carrier on an unlicensed frequency spectrum is assigned as a secondary cell (SCell) for a UE. Since there may be other RATs operating on the same unlicensed frequency spectrum as the LAA carrier, there is a need to enable co-existence of other RAT with LAA on an unlicensed frequency spectrum without undesirable interference between heterogeneous RATs.

**Solution to Problem**

This disclosure provides methods and apparatus for RRM measurement on unlicensed spectrum.

Embodiments of the invention are set forth in the appended claims.

In one example, a user equipment (UE) is provided. The UE comprises a transceiver configured to receive a received signal strength indicator (RSSI) measurement timing configuration (RMTC) over an unlicensed spectrum in a licensed assisted access (LAA). The UE further comprises at least one processor configured to generate an average RSSI measurement in accordance with the received RMTC. The at least one processor is further configured to generate a channel occupancy measurement report including a channel occupancy ratio and the transceiver is further configured to transmit the channel occupancy measurement report with an RSSI measurement report including the average RSSI measurement.

In another example, an eNodeB (cNB) is provided. The cNB comprises at least one processor configured to generate a received signal strength indicator (RSSI) measurement timing configuration (RMTC). The eNB further comprises a transceiver configured to transmit the generated RMTC over an unlicensed spectrum in a licensed assisted access (LAA) and receive a channel occupancy measurement report including a channel occupancy ratio with an RSSI measurement report including an average RSSI measurement in accordance with the transmitted RMTC.

In yet another example, a user equipment (UE) is provided. The UE comprises a transceiver configured to receive, from an eNodeB (eNB), a discovery reference signal (DRS) transmission following a fixed backoff period over an unlicensed spectrum in a licensed assisted access (LAA). The fixed backoff period is determined differently from a backoff period for data transmissions. The UE further comprises at least one processor configured to measure the DRS in accordance with the fixed backoff period.

**Advantageous Effects of Invention**

With the present disclosure, other RATs operating on the same unlicensed frequency spectrum as the LAA carrier can co-exist without undesirable interference between heterogeneous RATs.

**Brief Description of Drawings**

For a more complete understanding of this disclosure and its advantages, reference is now made to the following description, taken in conjunction with the accompanying drawings, in which:

FIGURE 1 illustrates an example wireless network according to embodiments of the present disclosure;

FIGURE 2 illustrates an example eNodeB (eNB) according to embodiments of the present disclosure;

FIGURE 3 illustrates an example user equipment (UE) according to embodiments of the present disclosure;

FIGURE 4A illustrates a high-level diagram of an orthogonal frequency division multiple access transmit path according to embodiments of the present disclosure;

FIGURE 4B illustrates a high-level diagram of an orthogonal frequency division multiple access receive path according to embodiments of the present disclosure;

FIGURE 5 illustrates an example structure for a downlink (DL) transmission time interval (TTI) according to embodiments of the present disclosure;

FIGURE 6 illustrates an example structure for a common reference signal resource element (CRS RE) mapping according to embodiments of the present disclosure;

FIGURE 7 illustrates an example carrier aggregation scheme on licensed and unlicensed spectrum according to embodiments of the present disclosure;

FIGURE 8 illustrates an example time division multiplexing (TDM) transmission pattern of a long term evolution-unlicensed (LTE-U) downlink carrier according to embodiments of the present disclosure;

FIGURE 9 illustrates an example configuration of time domain position for primary synchronization signal/secondary synchronization signal (PSS/SSS) according to embodiments of the present disclosure;

FIGURE 10 illustrates an example of a discovery reference signal (DRS) transmission according to embodiments of the present disclosure;

FIGURE 11 illustrates another example of a DRS transmission according to embodiments of the present disclosure;

FIGURE 12 illustrates an example of an aperiodic DRS transmission according to embodiments of the present disclosure;

FIGURE 13 illustrates an example of a received signal strength indicator (RSSI) measurement for high-load downlink and uplink WiFi traffic according to embodiments of the present disclosure; and

FIGURE 14 illustrates an example of signaling flow for RSSI transmission on unlicensed spectrum according to embodiments of the present disclosure.

## Mode for the Invention

Other technical features may be readily apparent to one skilled in the art from the following figures, descriptions, and claims.

Before undertaking the DETAILED DESCRIPTION below, it may be advantageous to set forth definitions of certain words and phrases used throughout this patent document. The term "couple" and its derivatives refer to any direct or indirect communication between two or more elements, whether or not those elements are in physical contact with one another. The terms "transmit," "receive," and "communicate," as well as derivatives thereof, encompass both direct and indirect communication. The terms "include" and "comprise," as well as derivatives thereof, mean inclusion without limitation. The term "or" is inclusive, meaning and/or. The phrase "associated with," as well as derivatives thereof, means to include, be included within, interconnect with, contain, be contained within, connect to or with, couple to or with, be communicable with, cooperate with, interleave, juxtapose, be proximate to, be bound to or with, have, have a property of, have a relationship to or with, or the like. The term "controller" means any device, system or part thereof that controls at least one operation. Such a controller may be implemented in hardware or a combination of hardware and software and/or firmware. The functionality associated with any particular controller may be centralized or distributed, whether locally or remotely. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

Moreover, various functions described below can be implemented or supported by one or more computer programs, each of which is formed from computer readable program code and embodied in a computer readable medium. The terms "application" and "program" refer to one or more computer programs, software components, sets of instructions, procedures, functions, objects, classes, instances, related data, or a portion thereof adapted for implementation in a suitable computer readable program code. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable memory device.

Definitions for other certain words and phrases are provided throughout this patent document. Those of ordinary skill in the art should understand that in many if not most instances, such definitions apply to prior as well as future uses of such defined words and phrases.

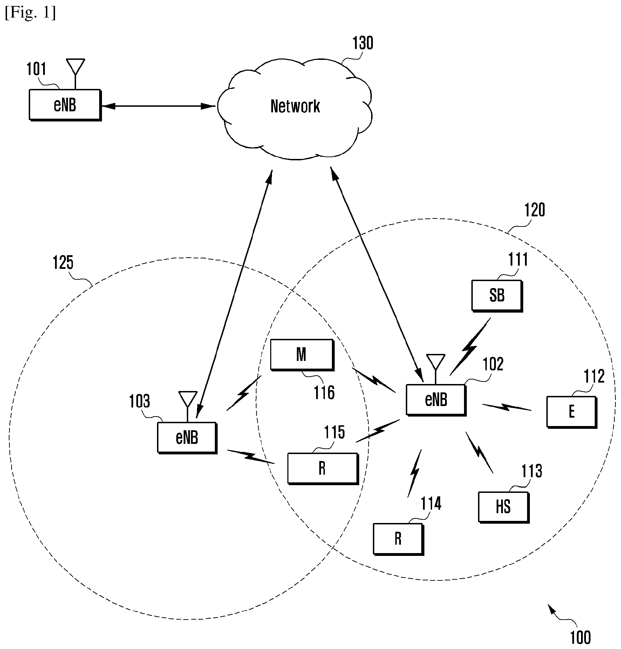

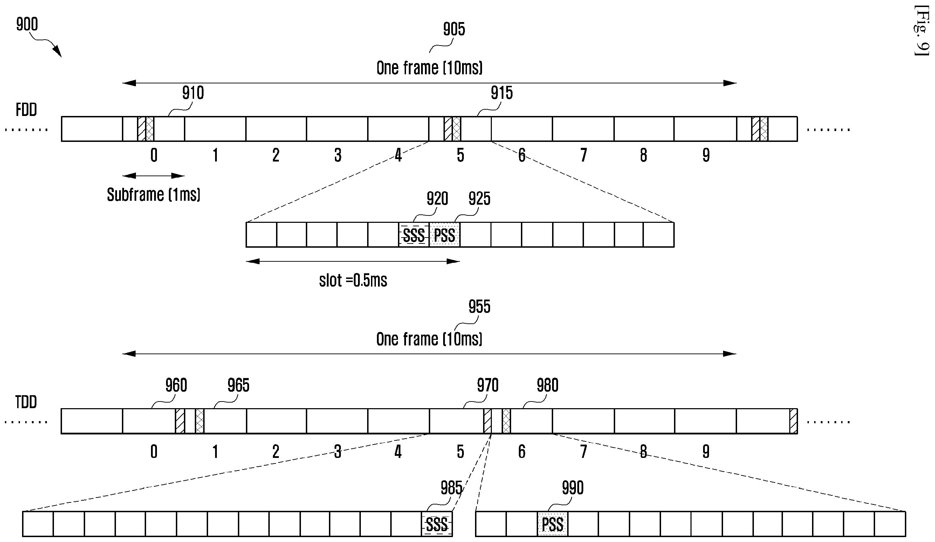

FIGURES 1 through 14, discussed below, and the various embodiments used to describe the principles of this disclosure in this patent document are by way of illustration only and should not be construed in any way to limit the scope of the disclosure. Those skilled in the art will understand that the principles of this disclosure may be implemented in any suitably arranged wireless communication system.

The following documents and standards descriptions are noted in the present disclosure 3GPP TS 36.211 v12.3.0, "E-UTRA, Physical channels and modulation" (REF1); 3GPP TS 36.212 v12.2.0, "E-UTRA, Multiplexing and Channel coding" (REF2); 3GPP TS 36.213 v12.3.0, "E-UTRA, Physical Layer Procedures" (REF3); 3GPP TR 36.872 v12.1.0, "Small cell enhancements for E-UTRA and E-UTRAN - Physical layer aspects"(REF4); 3GPP TS 36.133 v12.7.0, "E-UTRA, Requirements for support of radio resource management" (REF5); 3GPP TS 36.331 v12.3.0, "E-UTRA, Radio Resource Control (RRC) Protocol Specification"; and ETSI EN 301 893 v1.8.0 (2012-06), Harmonized European Standard, "Broadband Radio Access Networks (BRAN); 5GHz high performance RLAN."

FIGURES 1-4B below describe various embodiments implemented in wireless communications systems and with the use of orthogonal frequency division multiplexing (OFDM) or orthogonal frequency division multiple access (OFDMA) communication techniques. The descriptions of FIGURES 1-3 are not meant to imply physical or architectural limitations to the manner in which different embodiments may be implemented. Different embodiments of the present disclosure may be implemented in any suitably-arranged communications system.

FIGURE 1 illustrates an example wireless network 100 according to embodiments of the present disclosure. The embodiment of the wireless network 100 shown in FIGURE 1 is for illustration only. Other embodiments of the wireless network 100 could be used without departing from the scope of this disclosure.

As shown in FIGURE 1, the wireless network 100 includes an eNB 101, an eNB 102, and an eNB 103. The eNB 101 communicates with the eNB 102 and the eNB 103. The eNB 101 also communicates with at least one network 130, such as the Internet, a proprietary Internet Protocol (IP) network, or other data network.

The eNB 102 provides wireless broadband access to the network 130 for a first plurality of UEs within a coverage area 120 of the eNB 102. The first plurality of UEs includes a UE 111, which may be located in a small business (SB); a UE 112, which may be located in an enterprise (E); a UE 113, which may be located in a WiFi hotspot (HS); a UE 114, which may be located in a first residence (R); a UE 115, which may be located in a second residence (R); and a UE 116, which may be a mobile device (M), such as a cell phone, a wireless laptop, a wireless PDA, or the like. The eNB 103 provides wireless broadband access to the network 130 for a second plurality of UEs within a coverage area 125 of the eNB 103. The second plurality of UEs includes the UE 115 and the UE 116. In some embodiments, one or more of the eNBs 101-103 may communicate with each other and with the UEs 111-116 using 5G, LTE, LTE-A, WiMAX, WiFi, LTE-U(LAA) or other wireless communication techniques.

Depending on the network type, other well-known terms may be used instead of "eNodeB" or "eNB," such as "base station" or "access point." For the sake of convenience, the terms "eNodeB" and "eNB" are used in this patent document to refer to network infrastructure components that provide wireless access to remote terminals. Also, depending on the network type, other well-known terms may be used instead of "user equipment" or "UE," such as "mobile station," "subscriber station," "remote terminal," "wireless terminal," or "user device." For the sake of convenience, the terms "user equipment" and "UE" are used in this patent document to refer to remote wireless equipment that wirelessly accesses an eNB, whether the UE is a mobile device (such as a mobile telephone or smartphone) or is normally considered a stationary device (such as a desktop computer or vending machine).

Dotted lines show the approximate extents of the coverage areas 120 and 125, which are shown as approximately circular for the purposes of illustration and explanation only. It should be clearly understood that the coverage areas associated with eNBs, such as the coverage areas 120 and 125, may have other shapes, including irregular shapes, depending upon the configuration of the eNBs and variations in the radio environment associated with natural and man-made obstructions.

As described in more detail below, one or more of the UEs 111-116 include circuitry, programing, or a combination thereof, for processing of a received signal strength indicator (RSSI) measurement timing configuration (RMTC) and generating of an average RSSI measurement in accordance with the received RMTC from the eNBs 101-103. In some embodiments, the UEs 111-116 generates a channel occupancy measurement report including a channel occupancy ratio and transmit the channel occupancy measurement report with an RSSI measurement report including the average RSSI measurement.

In some embodiments, the UEs 111-116 generates a channel occupancy ratio that is determined based on an amount of occupied measurement time unit (MTU) exceeding at least one threshold for an average RSSI measurement, wherein the at least one threshold is configured by a higher layer signal from the eNBs 101-103. In some embodiments, the RMTC is independently configured from a discovery reference signal (DRS) measurement timing configuration (DMTC). In some embodiments, the RMTC comprises a measurement duration and measurement period that determines a time period between the average RSSI measurements. In some embodiments, the UEs 111-116 receives OFDM symbol information to perform the average RSSI measurement, wherein the OFDM symbol information is indicated by a higher layer signal from the eNB. In some embodiments, the UEs 111-116 receives a fixed backoff period for measuring a DRS, wherein the fixed backoff period is configured by a higher layer signal from the eNB.

In some embodiments, the UEs 111-116 receive at least one clear channel assessment (CCA) threshold, each of which comprises different CCA threshold for measuring a DRS, wherein the at least one CCA threshold is configured by a higher layer signal from the eNBs 101-103. In some embodiments, the UEs 111-116 receive a value indicating a subframe structure configuration and process the value indicating the subframe structure configuration for receiving a downlink control channel, wherein the value indicating the subframe structure configuration comprises at least one of a value indicating a partial subframe duration configuration or a value indicating a full subframe duration configuration, the value indicating the subframe structure configuration being configured by downlink control information (DCI) format from the eNBs 101-103.

In some embodiments, the UEs 111-116 receive a fixed backoff period over an unlicensed spectrum in a licensed assisted access (LAA), wherein the fixed backoff period is determined for measuring a discovery reference signal (DRS) and measure the DRS in accordance with the fixed backoff period. In some embodiments, the UEs 111-11 receive at least one clear channel assessment (CCA) threshold, each of which comprises different CCA threshold for measuring a DRS, wherein the at least one CCA threshold is configured by a higher layer signal to the UE.

In certain embodiments, and one or more of the eNBs 101-103 includes circuitry, programing, or a combination thereof, for generating of a received signal strength indicator (RSSI) measurement timing configuration (RMTC) and processing of a channel occupancy measurement report including a channel occupancy ratio with an RSSI measurement report including an average RSSI measurement in accordance with the transmitted RMTC, wherein the channel occupancy ratio is determined based on an amount of occupied measurement time unit (MTU) exceeding at least one threshold for the average RSSI measurement, and wherein the at least one threshold is configured by a higher layer signal from the eNBs 101-103.

In some embodiments, the eNBs 101-103 generates and transmits, to the UEs 111-116, the RMTC that is independently configured from a discovery reference signal (DRS) measurement timing configuration (DMTC), wherein the RMTC comprises measurement duration and measurement period that determines a time period between the average RSSI measurements. In some embodiments, the eNBs 101-103 transmit OFDM symbol information for performing the average RSSI measurement of the UEs 111-116, wherein the OFDM symbol information is indicated by a higher layer signal to the UE.

In some embodiments, the eNBs 101-103 transmit a fixed backoff period for measuring a DRS, wherein the fixed backoff period is configured by a higher layer signal to the UE. In some embodiments, the eNBs 101-103 transmit at least one clear channel assessment (CCA) threshold, each of which comprises different CCA threshold for measuring a DRS, wherein the at least one CCA threshold is configured by a higher layer signal to the UE. In some embodiments, the eNBs 101-103 generates a value indicating a subframe structure configuration for transmitting a downlink control channel and transmit the value indicating the subframe structure configuration, wherein the value indicating the subframe structure configuration comprises at least one of a value indicating a partial subframe duration configuration or a value indicating a full subframe duration configuration, and wherein the value indicating the subframe structure configuration is configured by downlink control information (DCI) format to the UE.

Although FIGURE 1 illustrates one example of a wireless network 100, various changes may be made to FIGURE 1. For example, the wireless network 100 could include any number of eNBs and any number of UEs in any suitable arrangement. Also, the eNB 101 could communicate directly with any number of UEs and provide those UEs with wireless broadband access to the network 130. Similarly, each eNB 102-103 could communicate directly with the network 130 and provide UEs with direct wireless broadband access to the network 130. Further, the eNBs 101, 102, and/ or 103 could provide access to other or additional external networks, such as external telephone networks or other types of data networks.

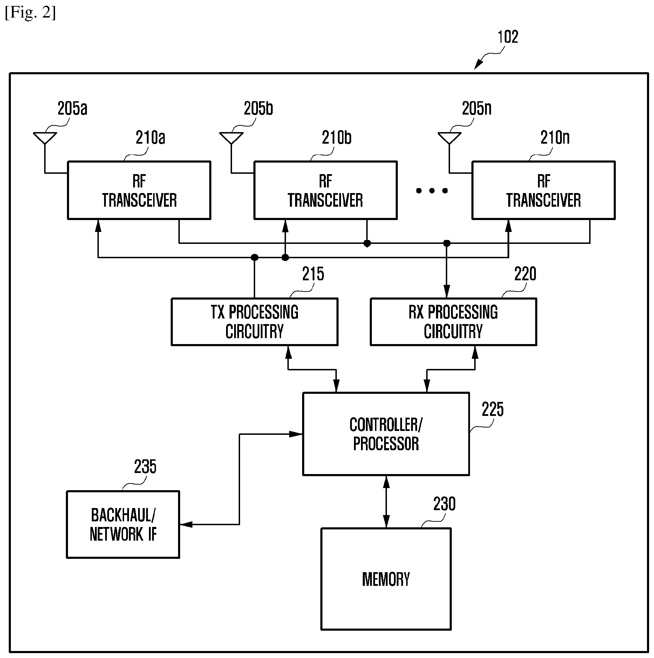

FIGURE 2 illustrates an example eNB 102 according to embodiments of the present disclosure. The embodiment of the eNB 102 illustrated in FIGURE 2 is for illustration only, and the eNBs 101 and 103 of FIGURE 1 could have the same or similar configuration. However, eNBs come in a wide variety of configurations, and FIGURE 2 does not limit the scope of this disclosure to any particular implementation of an eNB.

As shown in FIGURE 2, the eNB 102 includes multiple antennas 205a-205n, multiple RF transceivers 210a-210n, transmit (TX) processing circuitry 215, and receive (RX) processing circuitry 220. The eNB 102 also includes a controller/ processor 225, a memory 230, and a backhaul or network interface 235.

The RF transceivers 210a-210n receive, from the antennas 205a-205n, incoming RF signals, such as signals transmitted by UEs in the network 100. The RF transceivers 210a-210n down-convert the incoming RF signals to generate IF or baseband signals. The IF or baseband signals are sent to the RX processing circuitry 220, which generates processed baseband signals by filtering, decoding, and/or digitizing the baseband or IF signals. The RX processing circuitry 220 transmits the processed baseband signals to the controller/processor 225 for further processing.

The TX processing circuitry 215 receives analog or digital data (such as voice data, web data, e-mail, or interactive video game data) from the controller/processor 225. The TX processing circuitry 215 encodes, multiplexes, and/or digitizes the outgoing baseband data to generate processed baseband or IF signals. The RF transceivers 210a-210n receive the outgoing processed baseband or IF signals from the TX processing circuitry 215 and up-converts the baseband or IF signals to RF signals that are transmitted via the antennas 205a-205n.

In some embodiments, the RF transceivers 210a-210n are configure to transmit an RMTC over an unlicensed spectrum in a licensed assisted access (LAA) and receive a channel occupancy measurement report including a channel occupancy ratio with an RSSI measurement report including an average RSSI measurement in accordance with the transmitted RMTC. In some embodiment, the RF transceivers 210a-210n are configure to transmit a value indicating a subframe structure configuration for transmitting a downlink control channel, wherein the value indicating the subframe structure configuration comprises at least one of a value indicating a partial subframe duration configuration or a value indicating a full subframe duration configuration, and wherein the value indicating the subframe structure configuration being configured by downlink control information (DCI) format to the UE.

The controller/processor 225 can include one or more processors or other processing devices that control the overall operation of the eNB 102. For example, the controller/ processor 225 could control the reception of forward channel signals and the transmission of reverse channel signals by the RF transceivers 210a-210n, the RX processing circuitry 220, and the TX processing circuitry 215 in accordance with well-known principles. The controller/processor 225 could support additional functions as well, such as more advanced wireless communication functions.

For instance, the controller/processor 225 could support beam forming or directional routing operations in which outgoing signals from multiple antennas 205a-205n are weighted differently to effectively steer the outgoing signals in a desired direction. Any of a wide variety of other functions could be supported in the eNB 102 by the controller/processor 225. In some embodiments, the controller/processor 225 includes at least one microprocessor or microcontroller. In some embodiments, the controller/ processor 225 is configured to generate a received signal strength indicator (RSSI) measurement timing configuration (RMTC).

In some embodiments, the controller/processor 225 is configured to transmit OFDM symbol information for performing the average RSSI measurement of the UE, wherein the OFDM symbol information is indicated by a higher layer signal to the UE. In some embodiments, the controller/processor 225 is configured to transmit a fixed backoff period for measuring a DRS, wherein the fixed backoff period being configured by a higher layer signal to the UE. In some embodiments, the controller/processor 225 is configured to transmit at least one clear channel assessment (CCA) threshold, each of which comprises different CCA threshold for measuring a DRS, wherein the at least one CCA threshold is configured by a higher layer signal to the UE.

In some embodiments, the controller/processor 225 is configured to generate a value indicating a subframe structure configuration for transmitting a downlink control channel, wherein the value indicating the subframe structure configuration comprises at least one of a value indicating a partial subframe duration configuration or a value indicating a full subframe duration configuration, the value indicating the subframe structure configuration being configured by downlink control information (DCI) format to the UE.

As described in more detail below, the eNB 102 includes circuitry, programing, or a combination thereof for generating of RMTC and processing of RSSI measurement report and channel occupancy measurement report over on unlicensed spectrum and/or licensed spectrum in LTE cell and/or LAA.

The controller/processor 225 is also capable of executing programs and other processes resident in the memory 230, such as an OS. The controller/processor 225 can move data into or out of the memory 230 as required by an executing process.

The controller/processor 225 is also coupled to the backhaul or network interface 235. The backhaul or network interface 235 allows the eNB 102 to communicate with other devices or systems over a backhaul connection or over a network. The interface 235 could support communications over any suitable wired or wireless connection(s). For example, when the eNB 102 is implemented as part of a cellular communication system (such as one supporting 5G, LTE, LTE-A, or LTE-U(LAA)), the interface 235 could allow the eNB 102 to communicate with other eNBs over a wired or wireless backhaul connection. When the eNB 102 is implemented as an access point, the interface 235 could allow the eNB 102 to communicate over a wired or wireless local area network or over a wired or wireless connection to a larger network (such as the Internet). The interface 235 includes any suitable structure supporting communications over a wired or wireless connection, such as an Ethernet or RF transceiver.

The memory 230 is coupled to the controller/processor 225. Part of the memory 230 could include a RAM, and another part of the memory 230 could include a flash memory or other ROM.

Although FIGURE 2 illustrates one example of eNB 102, various changes may be made to FIGURE 2. For example, the eNB 102 could include any number of each component shown in FIGURE 2. As a particular example, an access point could include a number of interfaces 235, and the controller/processor 225 could support routing functions to route data between different network addresses. As another particular example, while shown as including a single instance of TX processing circuitry 215 and a single instance of RX processing circuitry 220, the eNB 102 could include multiple instances of each (such as one per RF transceiver). Also, various components in FIGURE 2 could be combined, further subdivided, or omitted and additional components could be added according to particular needs.

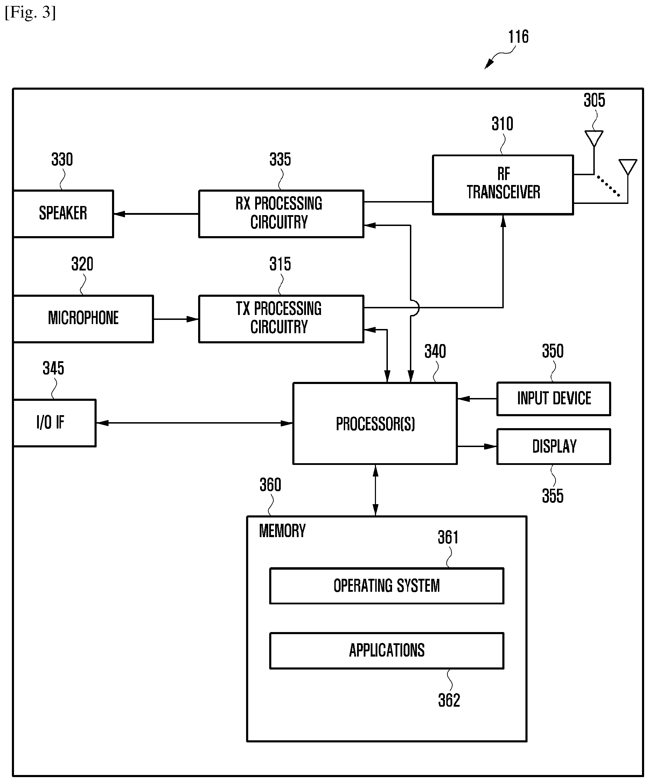

FIGURE 3 illustrates an example UE 116 according to embodiments of the present disclosure. The embodiment of the UE 116 illustrated in FIGURE 3 is for illustration only, and the UEs 111-115 of FIGURE 1 could have the same or similar configuration. However, UEs come in a wide variety of configurations, and FIGURE 3 does not limit the scope of this disclosure to any particular implementation of a UE.

As shown in FIGURE 3, the UE 116 includes a set of antennas 305, a radio frequency (RF) transceiver 310, TX processing circuitry 315, a microphone 320, and receive (RX) processing circuitry 325. The UE 116 also includes a speaker 330, a processor 340, an input/output (I/O) interface (IF) 345, an input device 350, a display 355, and a memory 360. The memory 360 includes an operating system (OS) 361 and one or more applications 362.

The RF transceiver 310 receives, from the set of antennas 305, an incoming RF signal transmitted by an eNB of the network 100. The RF transceiver 310 down-converts the incoming RF signal to generate an intermediate frequency (IF) or baseband signal. In some embodiment, the RF transceiver 310 is configured receive a received signal strength indicator (RSSI) measurement timing configuration (RMTC) over an unlicensed spectrum in a licensed assisted access (LAA) and transmit a channel occupancy measurement report with an RSSI measurement report including the average RSSI measurement.

In some embodiment, the RF transceiver 310 is configured to receive a value indicating a subframe structure configuration for receiving a downlink control channel, wherein the value indicating the subframe structure configuration comprises at least one of a value indicating a partial subframe duration configuration or a value indicating a full subframe duration configuration, and wherein the value indicating the subframe structure configuration is configured by downlink control information (DCI) format from the eNB. In some embodiment, the RF transceiver 310 is configured to receive a fixed backoff period over an unlicensed spectrum in a licensed assisted access (LAA), wherein the fixed backoff period is determined for measuring a discovery reference signal (DRS).

The IF or baseband signal is sent to the RX processing circuitry 325, which generates a processed baseband signal by filtering, decoding, and/or digitizing the baseband or IF signal. The RX processing circuitry 325 transmits the processed baseband signal to the speaker 330 (such as for voice data) or to the processor 340 for further processing (such as for web browsing data).

The TX processing circuitry 315 receives analog or digital voice data from the microphone 320 or other outgoing baseband data (such as web data, e-mail, or interactive video game data) from the processor 340. The TX processing circuitry 315 encodes, multiplexes, and/or digitizes the outgoing baseband data to generate a processed baseband or IF signal. The RF transceiver 310 receives the outgoing processed baseband or IF signal from the TX processing circuitry 315 and up-converts the baseband or IF signal to an RF signal that is transmitted via the antenna 305.

The processor 340 can include one or more processors or other processing devices and execute the OS 361 stored in the memory 360 in order to control the overall operation of the UE 116. For example, the processor 340 could control the reception of forward channel signals and the transmission of reverse channel signals by the RF transceiver 310, the RX processing circuitry 325, and the TX processing circuitry 315 in accordance with well-known principles. In some embodiments, the processor 340 includes at least one microprocessor or microcontroller.

The processor 340 is also capable of executing other processes and programs resident in the memory 360, such as generates an average RSSI measurement in accordance with the received RMTC, wherein the processor 340 is further configured to generate a channel occupancy measurement report including a channel occupancy ratio. In some embodiments, the processor 340 is configured to receive OFDM symbol information to perform the average RSSI measurement, wherein the OFDM symbol information is indicated by a higher layer signal from the eNB.

In some embodiments, the processor 340 is configured to receive a fixed backoff period for measuring a DRS, wherein the fixed backoff period is configured by a higher layer signal from the eNB. In some embodiments, the processor 340 is configured to receive at least one clear channel assessment (CCA) threshold, each of which comprises different CCA threshold for measuring a DRS, wherein the at least one CCA threshold is configured by a higher layer signal from the eNB. In some embodiments, the processor 340 is configured to process a value indicating the subframe structure configuration for receiving a downlink control channel, wherein the value indicating the subframe structure configuration comprises at least one of a value indicating a partial subframe duration configuration or a value indicating a full subframe duration configuration, the value indicating the subframe structure configuration is configured by downlink control information (DCI) format from the eNB.

In some embodiments, the processor 340 is configured to measure the DRS in accordance with the fixed backoff period. In some embodiments, the processor 340 is configured to receive at least one clear channel assessment (CCA) threshold, each of which comprises different CCA threshold for measuring a DRS, wherein the at least one CCA threshold is configured by a higher layer signal to the UE.

The processor 340 can move data into or out of the memory 360 as required by an executing process. In some embodiments, the processor 340 is configured to execute the applications 362 based on the OS 361 or in response to signals received from eNBs or an operator. The processor 340 is also coupled to the I/O interface 345, which provides the UE 116 with the ability to connect to other devices, such as laptop computers and handheld computers. The I/O interface 345 is the communication path between these accessories and the processor 340.

The processor 340 is also coupled to the input device 350 and the display 355. The operator of the UE 116 can use the input device 350 to enter data into the UE 116. The display 355 may be a liquid crystal display, light emitting diode display, or other display capable of rendering text and/or at least limited graphics, such as from web sites.

The memory 360 is coupled to the processor 340. Part of the memory 360 could include a random access memory (RAM), and another part of the memory 360 could include a Flash memory or other read-only memory (ROM).

Although FIGURE 3 illustrates one example of UE 116, various changes may be made to FIGURE 3. For example, various components in FIGURE 3 could be combined, further subdivided, or omitted and additional components could be added according to particular needs. As a particular example, the processor 340 could be divided into multiple processors, such as one or more central processing units (CPUs) and one or more graphics processing units (GPUs). In another example, the UE 116 may include only one antenna 305 or any number of antennas 305. Also, while FIGURE 3 illustrates the UE 116 configured as a mobile telephone or smartphone, UEs could be configured to operate as other types of mobile or stationary devices.

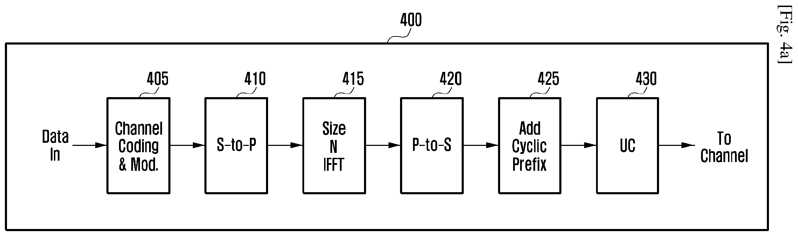

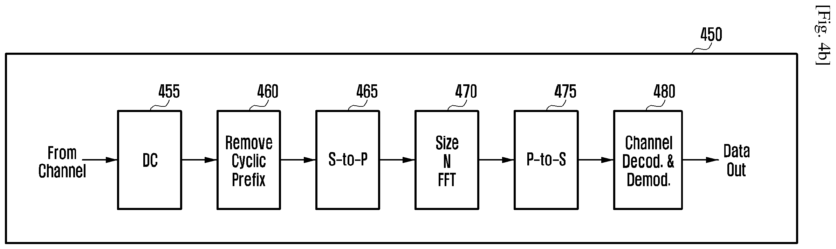

FIGURE 4A is a high-level diagram of transmit path circuitry 400. For example, the transmit path circuitry 400 may be used for an OFDMA communication. FIGURE 4B is a high-level diagram of receive path circuitry 450. For example, the receive path circuitry 450 may be used for an OFDMA communication. In FIGURES 4A and 4B, for downlink communication, the transmit path circuitry 400 can be implemented in a base station (eNB) 102 or a relay station, and the receive path circuitry 450 may be implemented in a user equipment (such as user equipment 116 of FIGURE 1). In other examples, for uplink communication, the receive path circuitry 450 can be implemented in a base station (such as 102 of FIGURE 1) or a relay station, and the transmit path circuitry 400 can be implemented in a user equipment (such as user equipment 116 of FIGURE 1).

Transmit path circuitry 400 comprises channel coding and modulation block 405, serial-to-parallel (S-to-P) block 410, Size N Inverse Fast Fourier Transform (IFFT) block 415, parallel-to-serial (P-to-S) block 420, add cyclic prefix block 425, and up-converter (UC) 430. Receive path circuitry 450 comprises down-converter (DC) 455, remove cyclic prefix block 460, serial-to-parallel (S-to-P) block 465, Size N Fast Fourier Transform (FFT) block 470, parallel-to-serial (P-to-S) block 475, and channel decoding and demodulation block 480.

At least some of the components in FIGURES 4A and 4B can be implemented in software, while other components can be implemented by configurable hardware or a mixture of software and configurable hardware. In particular, it is noted that the FFT blocks and the IFFT blocks described in this disclosure document can be implemented as configurable software algorithms, where the value of Size N can be modified according to the implementation.

In transmit path circuitry 400, channel coding and modulation block 405 receives a set of information bits, applies coding (such as low-density parity-check (LDPC) coding) and modulates (such as Quadrature Phase Shift Keying (QPSK) or Quadrature Amplitude Modulation (QAM)) the input bits to produce a sequence of frequency-domain modulation symbols. Serial-to-parallel block 410 converts (such as demultiplexes) the serial modulated symbols to parallel data to produce N parallel symbol streams where N is the IFFT/FFT size used in BS 102 and UE 116. Size N IFFT block 415 then performs an IFFT operation on the N parallel symbol streams to produce time-domain output signals. Parallel-to-serial block 420 converts (such as multiplexes) the parallel time-domain output symbols from Size N IFFT block 415 to produce a serial time-domain signal. Add cyclic prefix block 425 then inserts a cyclic prefix to the time-domain signal. Finally, up-converter 430 modulates (such as up-converts) the output of add cyclic prefix block 425 to RF frequency for transmission via a wireless channel. The signal can also be filtered at baseband before conversion to RF frequency.

The transmitted RF signal arrives at UE 116 after passing through the wireless channel, and reverse operations to those at eNB 102 are performed. Down-converter 455 down-converts the received signal to baseband frequency, and remove cyclic prefix block 460 removes the cyclic prefix to produce the serial time-domain baseband signal. Serial-to-parallel block 465 converts the time-domain baseband signal to parallel time-domain signals. Size N FFT block 470 then performs an FFT algorithm to produce N parallel frequency-domain signals. Parallel-to-serial block 475 converts the parallel frequency-domain signals to a sequence of modulated data symbols. Channel decoding and demodulation block 480 demodulates and then decodes the modulated symbols to recover the original input data stream.

Each of eNBs 101-103 can implement a transmit path that is analogous to transmitting in the downlink to user equipment 111-116 and may implement a receive path that is analogous to receiving in the uplink from user equipment 111-116. Similarly, each one of user equipment 111-116 may implement a transmit path corresponding to the architecture for transmitting in the uplink to eNBs 101-103 and may implement a receive path corresponding to the architecture for receiving in the downlink from eNBs 101-103.

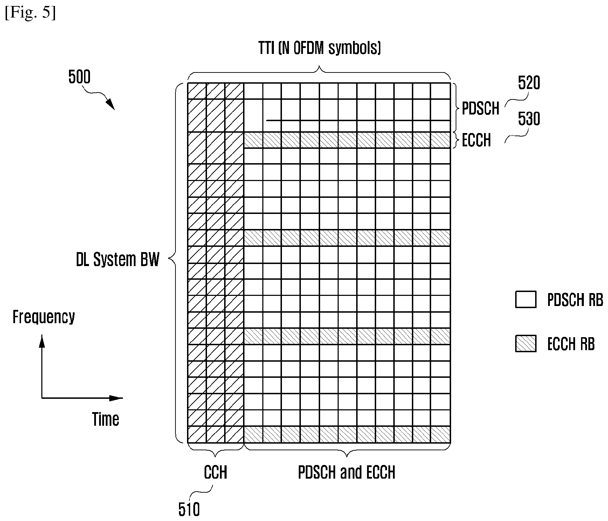

FIGURE 5 illustrates an example structure for a DL TTI 500 according to embodiments of the present disclosure. An embodiment of the DL TTI structure 500 shown in FIGURE 5 is for illustration only. Other embodiments can be used without departing from the scope of the present disclosure.

As illustrated in FIGURE 5, a DL signaling uses OFDM and a DL TTI includes N= 14 OFDM symbols in the time domain and K resource blocks (RBs) in the frequency domain. A first type of control channels (CCHs) is transmitted in a first $N_1$ OFDM symbols 510 including no transmission, $N_1$=0. Remaining $N - N_1$ OFDM symbols are primarily used for transmitting PDSCHs 520 and, in some RBs of a TTI, for transmitting a second type of CCHs (ECCHs) 530.

An eNB 103 also transmits primary synchronization signals (PSS) and secondary synchronization signals (SSS), so that UE 116 synchronizes with the eNB 103 and performs cell identification. There are 504 unique physical-layer cell identities. The physical-layer cell identities are grouped into 168 unique physical-layer cell-identity groups which of each group contains three unique identities. The grouping is such that each physical-layer cell identity is part of one and only one physical-layer cell-identity group. A physical-layer cell identity $N_{ID}^{cell} - 3N_{ID}^{(1)} + N_{ID}^{(2)}$ is thus uniquely defined by a number $N_{ID}^{(1)}$ in the range of 0 to 167, representing the physical-layer cell-identity group, and a number $N_{ID}^{(2)}$ in the range of 0 to 2, representing the physical-layer identity within the physical-layer cell-identity group. Detecting a PSS enables a UE 116 to determine the physical-layer identity as well as a slot timing of the cell transmitting the PSS. Detecting a SSS enables the UE 116 to determine a radio frame timing, the physical-layer cell identity, a cyclic prefix length as well as the cell uses ether a frequency division duplex (FDD) or a time division duplex (TDD) scheme.

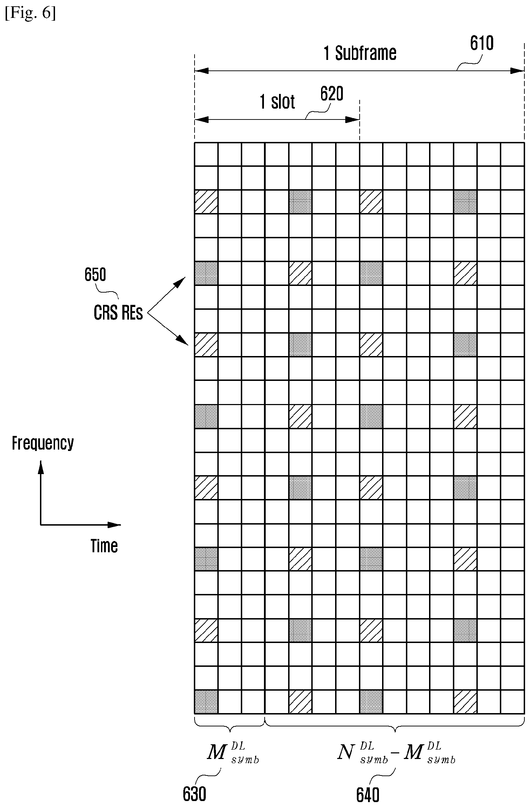

FIGURE 6 illustrates an example structure for a CRS RE mapping 600 according to embodiments of the present disclosure. An embodiment of the CRS RE mapping 600 shown in FIGURE 6 is for illustration only. Other embodiments may be used without departing from the scope of the present disclosure.

To assist cell search and synchronization, DL signals include synchronization signals such as a primary synchronization signal (PSS) and a secondary synchronization signal (SSS). Although having the same structure, the time-domain positions of the synchronization signals within a sub-frame 610 that includes at least one slot 620 differs depending on whether a cell is operating in frequency division duplex (FDD) or time division duplex (TDD). Therefore, after acquiring the synchronization signals, a UE determines whether a cell operates on the FDD or on the TDD, and a subframe index within a frame. The PSS and SSS occupy the central 72 sub-carriers, also referred to as resource elements (REs) 650, of an operating bandwidth. Additionally, the PSS and SSS inform of a physical cell identifier (PCID) for a cell and therefore, after acquiring the PSS and SSS, a UE knows the PCID of the transmitting cell.

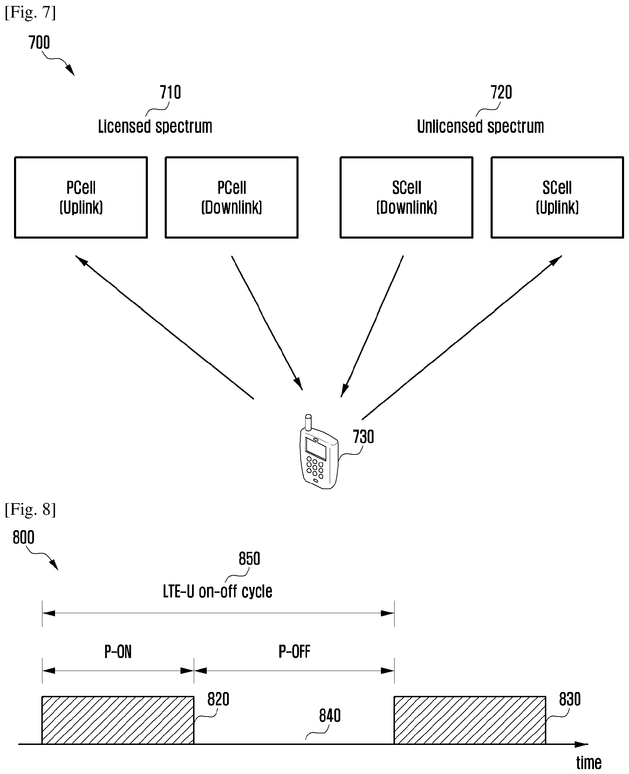

FIGURE 7 illustrates an example carrier aggregation scheme on licensed and unlicensed spectrum 700 according to embodiments of the present disclosure. An embodiment of the carrier aggregation on licensed and unlicensed spectrum 700 shown in FIGURE 7 is for illustration only. Other embodiments may be used without departing from the scope of the present disclosure.

A possible deployment scenario for LAA is to deploy an LAA carrier as a part of a carrier aggregation scheme, where the LAA carrier is aggregated with another carrier(s) on a licensed spectrum as illustrated in FIGURE 7. In a conventional scheme, carrier(s) on the licensed spectrum 710 is assigned as a PCell and carrier(s) on the unlicensed spectrum 720 is assigned as a SCell for a UE 730. FIGURE 7 shows an example where the LAA cell comprises of a downlink carrier with an uplink carrier. Since there may be other RATs operating on the same unlicensed frequency spectrum as the LAA carrier, there is a need to enable co-existence of other RAT with the LAA on an unlicensed frequency spectrum. A carrier sense multiple access (CSMA) may be applied, for example before a UE or an eNB transmits. In the CSMA operation, the UE or the eNB monitors a channel for a predetermined time period to determine whether there is an ongoing transmission in a channel. If no other transmission is sensed in the channel, the UE or the eNB may transmit data. If there is other transmission in the channel, the UE or the eNB postpones a transmission. Hereafter, the term LAA device may refer to an eNB or a UE operating on an LAA carrier.

FIGURE 8 illustrates an example TDM transmission pattern of an LTE-U downlink carrier 800 according to embodiments of the present disclosure. An embodiment of the TDM transmission pattern of an LTE-U downlink carrier 800 shown in FIGURE 8 is for illustration only. Other embodiments may be used without departing from the scope of the present disclosure.

As illustrated in FIGURE 8, an LAA carrier is ON (such as 820, 830) for a period P-ON and is OFF 840 for a period P-OFF. When the LAA carrier is ON, LTE signals are transmitted including at least one of a primary synchronization signal (PSS), a secondary synchronization signal (SSS), a common reference signal (CRS), a demodulation reference signal (DMRS), a physical downlink shared channel (PDSCH), a physical downlink control channel (PDCCH), an enhanced physical downlink common channel (EPDCCH), a channel status indication-reference signal (CSI-RS), or combinations thereof. However, when the LAA carrier is OFF, LTE signals are not transmitted.

The ON periods 820, 830 (or maximum channel occupancy time) have a maximum duration as defined by regulation (such as 10ms). The length for P-ON periods 820, 830 are adjusted or adapted by the scheduler of the LAA according to a buffer status or a traffic pattern at the LAA carrier and a co-existence metric requirement or target. WiFi APs or other RAT transmitters utilizes the P-OFF period 840 for transmissions since the period 840 is free from LAA interference.

If a listen-before-talk (LBT) protocol is applied, there is an idle period after the end of channel occupancy (such as a frame-based equipment). For example, a minimum idle period (such as 5%) of the channel occupancy is specified.

The idle period includes a clear channel assessment (CCA) period towards the end of the idle period where carrier sensing is performed by a UE. The LBT protocol is defined for a load-based equipment.

Discovery reference signals (DRS) or discovery Signals (DS) is transmitted by an LTE cell on an unlicensed spectrum. The DRS comprises physical signals such as PSS, SSS, CRS and CSI-RS, if configured. The purposes or functions of the DRS for the LTE cell on an unlicensed spectrum include, but are not limited to, discovery of the LTE cell, synchronization to the LTE cell, and RRM and CSI measurements of the LTE cell. Hereafter, the term LAA device refers to an eNB or a UE operating on a LAA carrier.

A network can configure a UE to measure multiple cells to generate signal quality measurements such as reference signal received power (RSRP) and/or reference signal received quality (RSRQ) of each cell for the purpose of radio resource management (RRM). Currently, a UE reports measurement results to a network when a reporting criterion is met, for example, a measurement reporting can be triggered when a RSRP/ RSRQ value is greater than a threshold that can be configured by the network. This measurement framework can be very efficient since these measurements are based on the always-on transmission of channels and RS (e.g. DRS) utilized for channel measurement and corresponding reports. However, unlike for a licensed carrier, the assumptions of the availability of signals for these measurements need to be revisited considering LBT and other requirements on the unlicensed carrier.

One major difference from scenarios considered when designing DRS in Rel-12 of LTE system is that an LBT operation on unlicensed spectrum makes a strictly periodic transmission of DRS not always possible. Instead, the DRS could be transmitted 'on demand,' by a cell to increase the probability of successful transmission to meet RRM measurement performance requirements. Similar to a channel status indicator (CSI), a low duty cycle periodic DRS would be beneficial for LAA RRM to ensure sufficient and reliable measurement opportunities. However, it needs to be evaluated under what circumstances a UE may expect the transmission of the DRS, and whether it is periodically transmitted with a fixed interval or in an aperiodic manner, depending on the channel access mechanism.

An aspect related to how a network transmits discovery signals is what potential assistance info would be needed for UE to detect the discovery signal on unlicensed carriers. Extending DRS design to an LAA carrier, the network could utilize a configured DRS measurement timing configuration (DMTC) as an opportunistic detection/measurement window for a UE. In one example, during the measurement window the UE would need to detect whether a cell was able to successfully access the channel and transmit a DRS occasion. In such example, the probability of successful DRS transmission for intra/inter-frequency multi-cell discovery and measurement may be increased. There may be different alternatives for the transmission of DRS within a DMTC window if LBT is applied to DRS.

In some embodiments, DRS transmission may be used as the existing Rel-12 of LTE system for the DRS and DMTC occasions. Within every periodic DMTC occasion, the DRS is transmitted in the same fixed subframe. When an LBT is applied, an unlicensed carrier may be successfully acquired before a start of the DRS occasion, otherwise a cell does not transmit DRS.

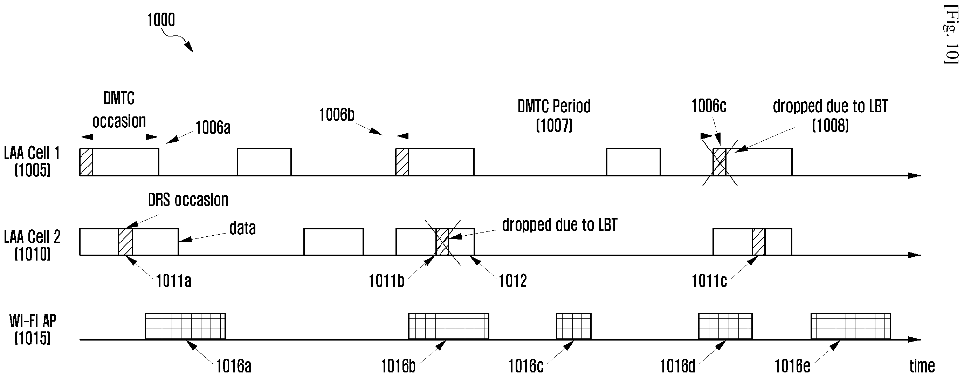

FIGURE 10 illustrates an example of a discovery reference signal (DRS) transmission 1000 according to embodiments of the present disclosure. An embodiment of the DRS transmission 1000 shown in FIGURE 10 is for illustration only. Other embodiments may be used without departing from the scope of the present disclosure.

As illustrated in FIGURE 10, the DRS transmission 1000 comprises an LAA cell 1 1005, an LAA cell 2 1010, and a WiFi AP 1015. The LAA cell 1 1005 transmits DRS occasions 1006a, 1006b, 1006c based on a CCA threshold and following a fixed backoff value (period). More specifically, the DRS occasions 1006a, 1006b, 1006c are transmitted in a DMTC period 1007. However, the DRS occasion 1006c is dropped due to an LBT protocol which may comprise the CCA threshold and the fixed backoff value which are configured differently than a CCA threshold on backoff value for transmissions containing data. Similarly, the LAA cell 2 1010 transmits DRS occasions 1011a, 1011b, 1011c. More specifically, data is followed by each of the DRS occasions 1011a, 1011b. The DRS occasion 1011b is dropped due to an LBT protocol. The WiFi AP 1015 transmits traffics 1016a, 1016b, 1016c, 1016d, 1016e.

In some embodiments, if the traffic on an unlicensed carrier is very light and contention is very infrequent, then it is possible that the approach may be sufficient to meet performance requirements with a sufficient number of DRS transmissions within a configured measurement period. However, in such embodiments, the presence of contention may be significantly impacted. In addition, a very large amount of overhead may be incurred if a cell reserves a channel before a subframe where a DRS occasion is configured, which is not beneficial from a system-level performance perspective.

In such embodiments, transmission probabilities are improved with introducing shorter periods for the DRS occasions (e.g. 20ms). However increasing the number of DRS transmissions would also increase a potential overhead in a system which could lead to additional congestion in the system. For example, although the performance requirement for RRM measurement only is for 1 L1 measurement every 200ms, if the DMTC period is increased from 40ms to 20ms, up to 10 DRS occasions may be transmitted which, if all are successful after applying LBT, would be much greater than required for UE measurement and reporting.

In some embodiments, an eNB may attempt to transmit a DRS occasion every configured DMTC period, subject to LBT. In such embodiments, the eNB may only transmit the DRS occasion every subset of configured DMTC period (e.g. every second or third DTMC period), subject to LBT. In such embodiments, a signaling may be provided to a UE (using either higher or physical layer) indicating the DRS transmission period relative to the DMTC period. For example a DRS transmission pattern or period may be indicated to the UE by the eNB.

In some embodiments, an eNB may transmit a DRS occasion in a subset of DMTC periods based on a desired performance target, a UE measurement report, DRS transmission history, or DRS transmission success probability. For example, the eNB may configure the DMTC period of 20ms, and performance targets of a L1 DRS measurement every 200ms. The eNB may attempt to transmit the DRS occasions subject to LBT in every DMTC period until the eNB receives a successful DRS measurement report from the UE within the current 200ms measurement window.

After receiving the report, the eNB may decide to not transmit the DRS in subsequent DMTC occasions within the measurement window if the performance requirement is successfully met. In addition the UE may not be required to measure subsequent DRS transmissions after providing the DRS measurement report within the measurement period (even if the eNB decides to continue to transmit DRS occasions within the remaining DMTC periods in the measurement period). An advantage of this scheme is the ability to maintain the same DRS transmission overhead while adapting the DMTC period configured for a UE, e.g. 5 DRS transmissions every 200ms, despite increasing the DMTC period from 40ms to 20ms, and reduce the measurement performance and complexity burden at the UE while meeting the desired performance requirement target.

The behavior used by the UE for DRS measurement may be based on explicit signaling or may be implicitly derived based on the DRS transmission history, a configured DMTC period, a measurement period, and/or a performance requirement. For example a UE may receive an indication from an eNB to suspend DRS measurement for a given time duration or number of DMTC periods. In one example, the UE may autonomously suspend DRS measurement after successfully measuring a DRS occasion within the configured measurement period. The UE capability for autonomous DRS measurement suspension may be configured by higher-layer signaling or indicated as a UE capability. The eNB may activate or deactivate such capability using higher layer signaling.

Adapting the DRS measurement behavior may be applied to CSI measurement as well as DRS measurement. In one example, 'one-shot' detection of DRS occasion is supported, since PSS/SSS/CRS energy accumulation across DMTC is more complicated as the PSS/SSS/CRS may not be transmitted due to LBT requirement.

In some embodiments, a periodic DMTC configuration is maintained for a DRS transmission, but the DRS transmission within a DMTC occasion may be variable, subject to LBT.

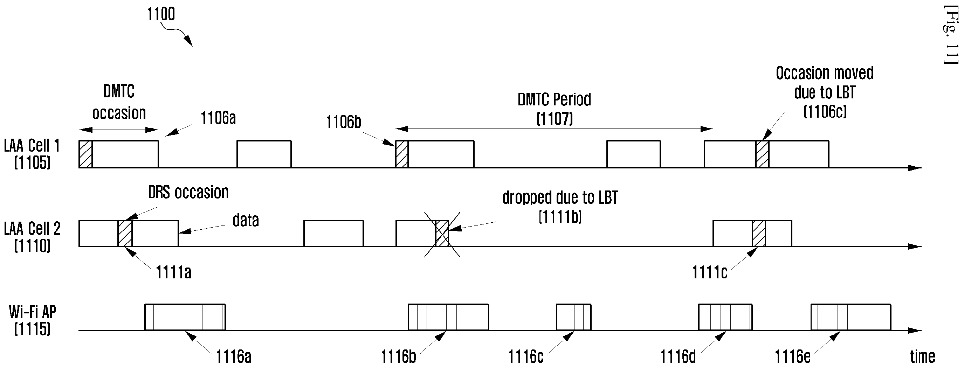

FIGURE 11 illustrates another example of a DRS transmission 1100 according to embodiments of the present disclosure. An embodiment of the DRS transmission 1100 shown in FIGURE 11 is for illustration only. Other embodiments may be used without departing from the scope of the present disclosure.

As illustrated in FIGURE 11, the DRS transmission 1100 comprises an LAA cell 1 1105, an LAA cell 2 1110, and a WiFi AP 1115. The LAA cell 1 1105 transmits DRS occasions 1106a, 1106b, 1106c based on a CCA threshold and following a fixed backoff value (period). More specifically, the DRS occasions 1106a, 1106b, 1106c are transmitted in a DMTC period 1107. However, the DRS occasion 1106c is dropped due to an LBT protocol which may comprise the CCA threshold and the fixed backoff value which are configured differently than a CCA threshold on backoff value for transmissions containing data. Similarly, the LAA cell 2 1q10 transmits DRS occasions 1111a, 1111b, 1111c. More specifically, data is followed by each of the DRS occasions 1111a, 1111c. The DRS occasion 1111b is dropped due to an LBT protocol and the DRS occasion 1111c is moved due to the LBT protocol. The WiFi AP 1115 transmits traffics 1116a, 1116b, 1116c, 1116d, 1116e.

In effect, a configured DMTC serves as an opportunistic detection/measurement window for a UE. During a DMTC occasion, a UE would need to detect whether a cell was able to successfully access a channel and transmit the DRS. The ability to vary a subframe location within the DMTC for a given cell's DRS transmission increases the probability of successful DRS transmission when several nodes are contending simultaneously. Depending on the LBT protocol, specifically a backoff mechanism, increasing a size of the DMTC window may allow for more transmission opportunities for different contending cells than currently possible with the Rel-12 of LTE system design.

A configurable DMTC window can be considered to provide more network flexibility for intra/inter-frequency RRM measurement. In one example the DMTC window may be configured by RRC as part of the measurement object including one or more carriers (including unlicensed carriers). In one example, the DMTC window may be configured based on different measurement periods or DMTC periods. In another example the DMTC window may be configured based on the LBT scheme and/or parameters configured for DRS transmissions.

In some embodiments, one potential issue is that PSS/SSS/CRS energy accumulation across DMTC would be complicated for a UE (a number of hypotheses of PSS/ SSS/CRS locations increases exponentially with a number of DMTC windows); hence it would be beneficial to support 'one-shot' detection of DRS independent of the DRS transmission approach.

As aforementioned, introducing shorter periods for the DRS occasions (e.g. 20ms) could also be considered for DRS transmission. In one embodiment, a DRS could be transmitted 'on demand,' by a cell to increase the probability of successful transmission to meet RRM measurement performance requirements. For example, the DRS could be transmitted at the start of an ON-duration, where data and the DRS are multiplexed. Providing the DRS outside of the configured DMTC, for example in the first subframe, provides additional benefits for obtaining time/frequency synchronization on an unlicensed carrier and CSI feedback.

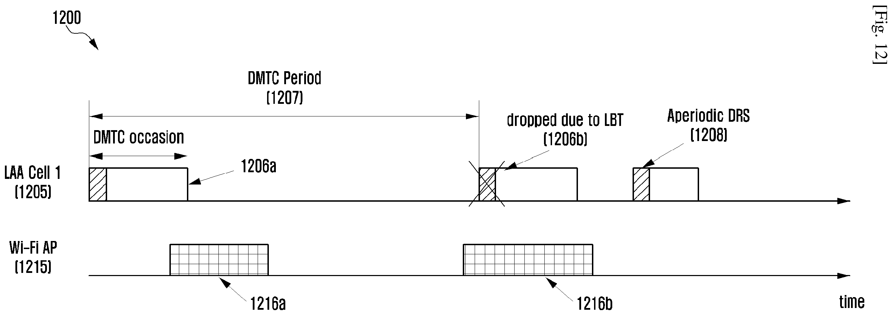

FIGURE 12 illustrates an example of an aperiodic DRS transmission according to embodiments of the present disclosure. An embodiment of the aperiodic DRS transmission 1200 shown in FIGURE 12 is for illustration only. Other embodiments may be used without departing from the scope of the present disclosure.

As illustrated in FIGURE 12, the aperiodic DRS transmission 1200 comprises an LAA cell 1 1205 and a WiFi AP 1215. The LAA cell 1 1205 transmits periodic DRS occasions 1206a, 1206b and aperiodic DRS occasion 1208 based on a CCA threshold and following a fixed backoff value (period). More specifically, the DRS occasions 1206a, 1206b are transmitted in a DMTC period 1207 (e.g., periodic DRS occasions). However, the DRS occasion 1206b is dropped due to an LBT protocol which may comprise the CCA threshold and the fixed backoff value which are configured differently than a CCA threshold on backoff value for transmissions containing data. The WiFi AP 1215 transmits traffics 1216a, 1216b.

Since LAA transmission durations will be responsive to system traffic, a measurement period may also need to be adaptive and account for the underlying load based equipment/frame based equipment (LBE/FBE) structure and LBT parameters. For example, long-term averaging can help determine LAA suitability (e.g. to support Scell act/deact). Long-term averaging could be based on the configuration provided by the measurement object and is averaged across transmissions (period per frequency). Short-term averaging can help LAA scheduling decisions to track the load per carrier. Short-term (L1 or MAC trigger) could assume one-shot detection (measurement period is up to eNB implementation). Both long-term and short-term measurements may be based on aperiodic and/or periodic measurement and reports.

One possible enhancement is the support of RRM measurement based on a single DRS occasion. Support of 'one-shot' DRS detection from a cell would be beneficial to avoid the complexity of DRS detection based on multiple DRS occasions from the cell due to the LBT requirement. For example, PSS/SSS energy accumulation across DMTC would be complicated for a UE (a number of hypotheses of PSS/SSS locations increases exponentially with a number of DMTC windows); hence it would be beneficial to support 'one-shot' detection/measurement of DRS.

In some embodiments, UE measurement reports based on a single DRS occasion can be used to indicate a DRS misdetection event by the UE. For example, if a DRS is detected in a DMTC occasion, RSRP/RSRQ can be reported, else there may not be a report or a report with an invalid value or other measurement such as RSSI can be reported. DRS can be used by the UE for synchronization as well, hence an eNB can use this information in the eNB's scheduling decision, for example, the eNB may not schedule the UE that missed the DRS, or only schedule such UE at a later subframe of a DL transmission burst after the UE has the opportunity to perform synchronization.

Traditionally, L1 filtering and L3 filtering of measurements are performed at the UE where the L1 filtering is generally up to UE implementation while the L3 filtering can be configured by a network assuming availability of an average measurement sample value to L3 once every measurement period (e.g. 200ms for normal non-DRX connected mode operation). However, DRS transmission based on an LBT and possibility of misdetection by the UE can complicate the filtering operations and could result in an eNB misunderstanding of the measurement report as the eNB is not aware of the misdetection. A simpler measurement framework is to obtain measurement results from single DRS occasions from the UE and it can be left to the network to perform the required L1 and L3 filtering.

There may be some options for L1 filtering at an eNB or UE. In one example, a fixed measurement period (e.g., averaging is done over varying number of samples) is used. In another example, a variable measurement period (e.g., averaging is done over fixed number of samples) is used. In yet another example, no L1 filtering (e.g. one-shot measurement) is used.

It may be noted that a network can easily construct short-term or long-term RRM measurement based on 'one-shot' measurements. In addition, a UE may be configured with a single or multiple measurement periods to support both long-term and short-term RRM measurement.

One advantage of performing cell/transmit point (TP) detection using a CSI-RS is the ability to measure many cells reliably in a short time window (due to high reuse factor of CSI-RS and zero power CSI-RS (ZP CSI-RS) configurations by neighboring cells). However without coordination between cells, it may be difficult to achieve multiplexing of CSI-RS resources between cells on an unlicensed carrier such that this property can be maintained. It is also possible to consider a modified DRS for a cell discovery and RRM measurement to support one-shot detection of the DRS and different LBT operation.

Due to the properties of the DRS design, namely the short duration and support for multiplexing of the transmissions serving and neighboring cells within the measurement window, the LBT design for DRS transmissions is one example where a different LBT design/configuration may be considered relative to the design used by the data transmissions.

For example, when contention is performed for a DRS transmission, a separate single fixed backoff value (e.g. distributed coordination function inter-frame space (DIFS)-like) may be utilized instead of a randomly generated value, to give priority to DRS over other transmissions including WiFi and LAA data transmissions which may utilize a different backoff value(s). In addition, since DRS transmission is subject to RRM performance requirements, exponential backoff mechanisms may not be suitable since the exponential backoff mechanism can lead to large variability in the transmission timing depending on the system load. Instead, linearly scaling the backoff and enforcing a maximum value on the backoff counter could be utilized to restrict potential DRS transmission within a measurement window. When data and DRS need to be transmitted, it can be up to the eNB to multiplex them in a single ON duration, transmit separately, or drop the DRS transmission.

In addition, a reuse-1 operation seems to have a clear benefit to support cell-discovery and RRM. This is especially true in the case of inter-frequency measurement, since reducing an amount of time a UE needs to spend tuned to non-serving carriers to obtain sufficient measurements is important. For example, one of the benefits of a DRS design introduced in Rel-12 of LTE system is to allow a network to coordinate transmissions of dormant cells to occur within the same DMTC window configured for a UE. However, if due to LBT, neighboring cells are contending for a channel to only transmit DRS, RRM measurements may be dispersed in time, which may lead to a decrease in RRM performance and potentially unnecessary system inefficiency.

In addition, the LAA-LAA coexistence mechanisms such as backoff counter coordination and CCA threshold adaptation may be suitable for this use case due to the fixed structure of the DRS and short duration.

In some embodiments, coordination between transmitters in the selection of the random backoff counter is used as part of an LBT procedure. For example, if neighboring LAA nodes are selected or allocated the same value for the backoff counter during a CCA period, the transmission of neighboring LAA nodes would overlap upon the counter fully decrementing. The coexistence procedure would still need to be maintained by each node individually, since the transmission of a given node would still require the CCA as measured at the node to indicate a clear channel.

In some embodiments, by configuring a different (in one example, higher, in another example, lower) CCA threshold for transmissions of DRS by LAA cells than for other data transmissions or for transmissions of other detected RATs, increased channel reuse could be obtained for the DRS transmissions of neighboring LAA cells. The CCA threshold could be utilized, for example during the configured DMTC window or DRS occasion transmission, while another threshold is used otherwise, for data transmissions in one example. If the LBT procedure for the DRS transmission succeeds, the UE would receive and measure the DRS transmission based on the CCA threshold following the fixed backoff period.

In the legacy LTE system, RSRP, RSSI and RSRQ are specified and only RSRP and RSRQ can be reported to eNB by a UE. RSSI can serve as a metric for interference and it is possible to infer RSSI from RSRP and RSRQ reports. However, if an LAA measurement signal is not transmitted on a carrier, RSRP and RSRQ reports would not be available for the carrier. For LAA, potential interference measurement enhancements such as extending the existing measurement procedure to include UE RSSI reports may be beneficial.

In one example, when a DRS is transmitted within a measurement window (e.g. if the measurement window is configured as an LAA DMTC), a UE may report RSRP, RSRQ, and/or RSSI. Inside a DRS occasion, if the DRS occasion is missed (e.g. due to LBT), only the RSSI may be valid. Outside DRS occasion (e.g. outside DMTC), RSSI measurement may be useful for a channel selection (such as inter-frequency) and a hidden node detection (such as intra-frequency).

The definition of RSSI measurement on an unlicensed carrier can be different in cases of measurement with/without the presence of the DRS. For example, how/ whether to provide time restrictions or measurement time-line information would impact proper interpretation of the report by the network. In addition, a triggering mechanism for RSSI reports may be considered, especially for measurement on a non-serving carrier.

In one example, a time/frequency measurement restriction for a first type of RSSI measurement including subframes, where a DRS occasion is transmitted, may be indicated/configured to a UE and a second time/frequency measurement restriction indication not including subframes, where a DRS occasion is transmitted, may be indicated/configured for a UE. In addition, the measurement and reporting periods, and triggering conditions may be configured independently between the different RSSI measurement types.

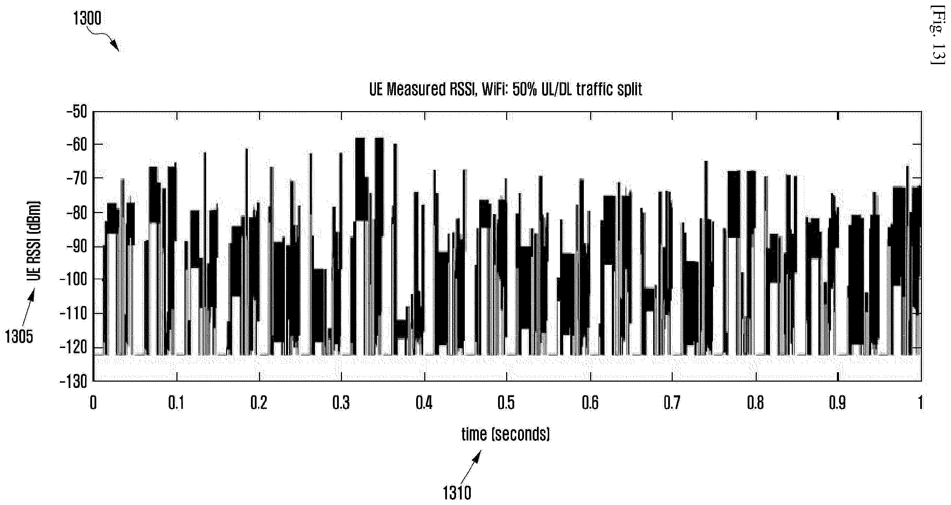

FIGURE 13 illustrates an example of a received signal strength indicator (RSSI) measurement 1300 for high-load downlink and uplink WiFi traffic according to embodiments of the present disclosure. An embodiment of the RSSI measurement 1300 shown in FIGURE 13 is for illustration only. Other embodiments may be used without departing from the scope of the present disclosure.

AS shown in FIGURE 13, the received signal strength indicator measurement 1300 comprises a UE RSSI 1305 and a time 1310. As shown in FIGURE 13, the RSSI observed at a typical UE over 1 second (sec) with a measurement averaging granularity or measurement time unit (MTU) of 0.08 millisecond (ms) is provided. As shown in FIGURE 13, an MTU size has a significant influence in capturing the rapid fluctuation of the RSSI, due to the bursty nature of a traffic model. For example, WiFi ACK duration can typically be less than 100 microsecond ($\mu$s). On the other hand, for a 1ms-5ms averaging granularity may have sufficient fidelity for estimating the overall load of the carrier over a longer-term period. Therefore, it is important that if RSSI is useful in detecting hidden nodes, the MTU duration may roughly be of the same order as the minimum transmission granularity.

In one example, if the existing 6ms measurement gap is applied for RSSI measurements, the maximum averaging granularity of the MTUs may be constrained within the period (e.g., 6ms measurement gap). In another example, one or more LTE OFDM symbols can comprise MTU duration. In yet another example, one or more CCA slots (e.g. $9\mu s$) may comprise MTU duration (e.g. 8 CCA slots = 72 $\mu s$ MTU size). Additionally, a maximum number of consecutive MTUs which can be aggregated to produce an average RSSI measurement (e.g. 70 MTUs of 72 $\mu s$ is approximately a total of 5ms) may be comprised.

To support hidden node detection, RSSI measurement reports along with time information about when the measurements were made can be supported. An RSSI measurement timing configuration (RMTC) may indicate a measurement duration (e.g. 5ms) and period between measurements (e.g. 40/80/160ms etc.). In order to provide flexibility to measure a variety of scenarios, the RMTC may be independently configured from the DMTC. For example, it seems beneficial to avoid RSSI measurement during transmission occasions from the serving eNB (e.g. DRS within the DMTC).

The measurement period (e.g., duration) may consist of periodic measurement "gaps" to support inter-frequency measurement with or without a measurement gap configuration, depending on the UE capability.

Multiple types of RSSI measurements and/or reports may also be supported. For example measurements of average RSSI and channel occupancy (e.g., percentage of time that RSSI was above a threshold) can be supported for an LAA. To support the reporting of channel occupancy, multiple MTUs may be considered within the indicated measurement period. A length of the period, and thus a number of MTUs utilized may depend on multiple factors, including the desired latency of the measurement report and whether the RSSI measurements are being used for initial channel selection or hidden node detection periodically performed on an active LAA SCell.

A straight-forward occupancy metric definition is provided as % of MTUs > RSSI_Thresh, where the % of MTUs and RSSI_Thresh are fixed or configured by higher layer (e.g. RRC signaling). In addition one or more thresholds or the % values can be measured and reported. In one example, the individual measurement samples may be reported. In another example, the individual samples may be compared to an RSSI_Thresh and the result of the comparison is reported as a bitmap. In such example, if the sampled RSSI value is larger than the threshold the bitmap value is set to 1, otherwise it is set to 0. A network may further aggregated the values across MTU samples and constructs one or more channel occupancy metrics or averaged RSSI values if the absolute measurement value is also reported.

In some embodiments, an RMTC configuration may comprise an MTU averaging size = 5ms, a measurement gap interval of 40ms, a measurement period of 320ms, and RSSI_Thresh = -82 dBm. The measurement period influences the granularity of the reported occupancy metric value. In one example, a measurement period of 40ms relies on only a single MTU averaging period and is thus a binary decision. However a measurement period of 480ms is based on 12 MTU averaging periods and the occupancy metric granularity is 1/12. However, in order to accommodate network flexibility to support different traffic load scenarios and measurement latency requirements, it may be desirable for the measurement period to be configurable. In another example, it may be beneficial to select the measurement period from a range similar to what can be supported by the existing RRM measurement framework (e.g. multiples of 40ms up to 480 ms).

For licensed carriers, a CSI reporting is periodic or aperiodic. However, for an LAA, there are unique challenges for a network to acquire a timely CSI feedback. For example, an RS utilized for CSI measurement may need to be transmitted with very low density or is transmitted only opportunistically when an eNB successfully acquires a channel satisfy regulatory requirements such as an LBT. If the eNB fails to access the channel with sufficient frequency, a reported CQI, especially periodic CQI, could be outdated and not useful for the network. The same also applies for interference measurements which may additionally need to be differentiated depending on the network state as aforementioned in the previous section. Two examples of potential enhancements are to extend a function of DRS for CSI measurement and to support aperiodic CSI-RS transmissions without concurrent data transmissions.

As aforementioned, an eNB may choose to transmit or not transmit DRS occasions within a given DMTC period based on performance requirements, a past transmission history, or system congestion considerations. In one example, a UE behavior to measure or not measure CSI on the DRS may be based on the same explicit or implicit mechanisms used for RRM measurement.

In another example, an indication for a UE to measure CSI based on the DRS in a given DMTC occasion may override UE behavior to skip DRS measurement in the DMTC (e.g. due to previously providing a measurement report within the configured measurement period). In yet another example, the UE may still skip RRM measurement in the DRS, while providing CSI measurement based on the DRS, or may also provide the CSI and RRM measurement reports based on the detected DRS. In yet another example, different signaling methods (e.g. physical vs. higher layer signaling) may be utilized to control the UE RRM and CSI measurement behavior on DRS occasions within DMTC periods respectively. The valid measurement periods for determining whether the UE can skip CSI or RRM measurement on subsequent DMTC periods may also be configured independently.

In addition, multiple potential LAA carriers may be configured for a UE which exceed the CA capability (e.g. 10 20MHz carriers, for a UE with 2 CC capabilities on 5GHz band). In this instance, a scalable, efficient, and adaptive framework for CSI measurement across the multiple carriers would be beneficial to support opportunistic channel access and low latency for data scheduling based on up-to-date CSI feedback. Furthermore, how CSI measurement is triggered and reporting conditions may be different from the existing framework for licensed carriers. For example, the timing of valid CSI reference subframes for channel measurements may be relative to the availability of an ON duration or may be independent in the case of interference measurements. Mechanisms for the network to indicate resources for CSI measurement as well as reporting conditions (e.g. measurement thresholds) are possible solutions to accommodate opportunistic channel access and dynamic interference levels.

In order to support efficient data transmission on unlicensed spectrum and flexibility to support different transmission modes (TMs) or schemes which are based on different reference symbol combinations within one or more subframes of a DL data burst, there is a need for an eNB to adapt one or more transmission parameters across one or more subframes/data bursts such as a subframe structure, a transmission mode or transmission scheme configuration, presence and configuration of physical signals (e.g. CRS, CSI-RS, PRS, PSS, SSS, DRS), a transmission (signal) power level and/or energy per resource element (EPRE) of one or more physical signals, a measurement restriction configuration for RRM and/or CSI, a starting OFDM symbol index for PDSCH, or PDCCH or control region duration.

In some embodiments, adapting the transmission parameters within a data burst, explicit dynamic signaling of one or more of the set of previously described parameters may be provided to the UE. This is beneficial since reception of the explicit indication allows the UE to appropriately perform demodulation, channel estimation, and measurement (CSI or RRM).

In some embodiments, a new signaling design, a new DCI format (U-DCI), may be defined to indicate the values of the signaled parameters, in addition to one or more of the fields in one or more of the existing DCI formats, for example the resource allocation fields (RA).

In some embodiments, a U-DCI may contain dynamically adapted transmission parameters and be a separate DCI format from one providing the legacy scheduling and resource allocation parameters. In some embodiments, reserved values or joint coding of fields in existing DCI formats may be used for signaling the parameters.

In some embodiments of parameter signaling, the indicated parameters may be indicated in a UE-specific manner (separate or the same DCI formats for DL assignment or UL grant). In some embodiments, the indicated parameters may be indicated in a common control message (e.g. cell-specific or UE-group specific). For example, the U-DCI may be transmitted in the common search space of the PDCCH or other indicated common control region of the (E)PDCCH. In some embodiments, a combination of UE-specific and common signaling may be utilized. This is beneficial because certain parameters are typically UE-specific (e.g. configured TM or transmission scheme) and others are common to all UEs in the burst (e.g. subframe configuration).

In one example, a U-DCI can be signaled in the same carrier as the target subframe of U-DCI signaling. In another example, the U-DCI can also be signaled from another serving cell (e.g. PCell or another serving cell from licensed band). In yet another example, the U-DCI may be provided in every subframe. In yet another example, the U-DCI may be provided in specifically indicated or predefined subframe(s) (e.g. once per burst in the first subframe of the burst, or in subframes 0 and 5). In yet another example, the U-DCI can be provided in any subframe or any subframe within a subset of subframes. If the UE doesn't not detect the U-DCI but there is a DL transmission to be received by the UE (e.g. via blind detection of transmission such as based on the presence of CRS port 0 or port 0&1), the UE assumes a default value or a default set of values for the transmission parameters.

In addition, certain parameters for one or more subframes may be provided within the same U-DCI. For example, the subframe configuration/structure for the current subframe may be provided in addition to adjacent subframes (e.g. U-DCI transmitted in subframe t can provide the subframe configurations/structures for subframes transmitted in TTIs t-1, t, and t+1, or in TTIs t and t+1, or in TTIs t-1 and t). This is beneficial in cases where the UE may perform operations across subframes (e.g. channel estimation, RRM measurement) and may need to utilize the subframe configuration information for the subframes, but does not require the UE to decode control signaling for every subframe within a burst.

When U-DCI is provided in a subframe, the first OFDM symbol of the subframe can be used to carry U-DCI. This is suitable, for example if U-DCI is carried by PDCCH. If U-DCI is carried by EPDCCH, a default or preconfigured EPDCCH PRB(s) can be used to carry U-DCI.

In some embodiments, certain subframes may have a fixed structure without the need for utilizing explicit configuration signaling (e.g. subframes 0 and 5 with a normal DL subframe structure). In these subframes, a UE may not need to attempt to decode a U-DCI based on prior detection of the subframe index or subframe structure. In some embodiments, multiple U-DCI formats may be introduced depending on the subframe index or network configuration. The U-DCI format(s) to be assumed for decoding at the UE may be blindly detected or configured by higher layer signaling. In some embodiments, a minimum format size for the U-DCI may be supported by the different U-DCI formats with a common set of parameters and can be first decoded by the UE before the additional part of the U-DCI formats are detected based on signaling within the U-DCI or by higher layer configuration of the supported U-DCI formats. In one example, the parameters may be signaled in independent fields. In another example, joint encoding of the parameters may be utilized where the sets of parameter combinations are fixed or configured for the UE.

A subframe structure can be indicated between different possible configurations, for example a normal DL subframe (e.g. non-MBSFN subframes), an MBSFN subframe, or other additional subframe structure (e.g. reduced CRS subframe, which can be subframe with reduced number of CRS ports (e.g. only port 0) or with reduced number of OFDM symbols with CRS (e.g. only the first OFDM symbol of the subframe); or DwPTS structure/duration) which is supported by carriers operating on unlicensed spectrum.

In one example, an index could be signaled which indicates the configuration for the subframe (or burst) as illustrated in Table 1. The mapping of the subframe structure configurations to the indices could be fixed or provided by higher layer signaling (e.g. RRC or SIB). When the subframe structure is indicated using a common signaling (e.g. U-DCI) per burst (e.g. in the beginning of a DL transmission burst such as first TTI of the burst) or per a time duration, the same subframe structure can be assumed for the entire transmission burst.

[TABLE 1]

| Index | Subframe structure |
|---|---|
| 0 | Normal DL subframe |
| 1 | MBSFN subframe |
| 2 | Reduced CRS subframe |
| 3 | Reserved |

In another example, there can a bit field indicating the subframe structure of each subframe within the DL transmission burst. In such example, if only two subframe structures are defined (e.g. normal DL subframe and MBSFN subframe), there can be a bitmap of 0s and Is, where each bit corresponds to a subframe of the burst can be indicated to the UE.

In yet another example, when the subframe structure is indicated using a common signaling per subframe, joint coding can be done for the number of OFDM symbols for PDCCH and the subframe type, for example, using PCFICH. Each CFI value can be mapped to a combination of the number of PDCCH OFDM symbols and the subframe type (e.g. MBSFN or non-MBSFN subframe). Examples of joint coding are shown in Table 1a and Table 1b. Other examples are also possible.

[Table 1a]

| CFI | Subframe structure |
|---|---|
| 1 | Normal DL subframe (non-MBSFN subframe) & 1 PDCCH OFDM symbol (or PDSCH starts from 2nd OFDM symbol) |
| 2 | Normal DL subframe (non-MBSFN subframe) & 2 PDCCH OFDM symbols (or PDSCH starts from 3rd OFDM symbol) |
| 3 | Normal DL subframe (non-MBSFN subframe) & 3 PDCCH OFDM symbols (or PDSCH starts from 4th OFDM symbol) |
| 4 | MBSFN subframe & 1 PDCCH OFDM symbol (or PDSCH starts from 2nd OFDM symbol) |

[Table 1b]

| CFI | Subframe structure |
|---|---|
| 1 | MBSFN subframe & 1 PDCCH OFDM symbol (or PDSCH starts from 2nd OFDM symbol) |
| 2 | Normal DL subframe (non-MBSFN subframe) & 2 PDCCH OFDM symbols (or PDSCH starts from 3rd OFDM symbol) |
| 3 | Normal DL subframe (non-MBSFN subframe) & 3 PDCCH OFDM symbols (or PDSCH starts from 4th OFDM symbol) |
| 4 | MBSFN subframe & 2 PDCCH OFDM symbols (or PDSCH starts from 3rd OFDM symbol) |

In yet another example, the subframe structure such as the DwPTS/partial subframe duration is indicated with U-DCI. The DwPTS/partial subframe duration indicated can be one of the whole or subset of the range of values {3, 6, 9, 10, 11, 12, 14}. The U-DCI signal value mapping to DwPTS/partial subframe is given in Table 1c. In such example, the U-DCI can be signaled using DCI format 1C, for example scrambled with a common RNTI (e.g. a new RNTI or eIMTA-RNTI can be reused). In such example, the U-DCI can also be signaled using a PHICH resource configured by RRC.

[Table 1c]

| U-DCI signal value | Subframe structure (DwPTS/partial subframe duration) (normal CP assumed) |
|---|---|
| 0 | 3 OFDM symbols (symbot#0 - #2) |
| 1 | 6 OFDM symbols (symbot#0 - #5) |
| 2 | 9 OFDM symbols (symbot#0 - #8) |
| 3 | 10 OFDM symbols (symbo#0 - #9) |
| 4 | 11 OFDM symbols (symbot#0 - #10) |
| 5 | 12 OFDM symbols (symbot#0 - #11) |
| 6 | 14 OFDM symbols (symbot#0 - #13) |
| 7 (or more) | Reserved |

In yet another example, the U-DCI information can be included in a UE-specific DCI format, such as DL assignment or UL grant. The UE may use the U-DCI information to determine if the target subframe of U-DCI signaling is the last subframe of a transmission burst. When the UE may assume that the transmit power of CRS and/or CSI-RS (EPRE) are the same per transmission burst but can be varied between two different bursts, determining when the burst ends can assist UE in channel estimation (e.g. for CRS based demodulation) and CSI feedback (e.g. whether the UE can assume or use the CRS or CSI-RS of future subframe for channel interpolation or measurement averaging with the CRS/CSI-RS of the current subframe).

Upon receiving U-DCI that indicates duration shorter than 14 OFDM symbols, the UE may assume that the target subframe of the U-DCI signaling is the last subframe of the transmission burst. However, if the UE receives a U-DCI indicating 14 OFDM symbols for subframe n, the UE may need to detect the presence of CRS port 0, or port 0+1 in subframe n+1 (e.g. first OFDM symbol) to determine if the target subframe of U-DCI signaling is the last subframe of a transmission burst. In particular, subframe n is indicated to be 14 OFDM symbols and if CRS port 0 or port 0+1 is present in the first OFDM symbol of subframe n+1, the UE may assume that subframe n and n+1 belong to the same transmission burst; otherwise if subframe n is indicated to be 14 OFDM symbols and if CRS port 0 or port 0+1 is not present in the first OFDM symbol of subframe n+1, subframe n is the last subframe of the transmission burst.

In yet another example, when 14 OFDM symbol (full subframe is indicated), whether the subframe is the last subframe of the transmission burst is also indicated in Table 1d. Alternatively, U-DCI transmitted in subframe n indicates the subframe structure (full or DwPTS/partial subframe structure) in subframe n+1. In this case, 0 OFDM symbol (DTX) can also be indicated for example as shown in Table 1e.

[Table 1d]

| U-DCI signal value | Subframe structure (DwPTS duration) (normal CP assumed) |
|---|---|
| 0 | 3 OFDM symbols (symbot#0 - #2) |
| 1 | 6 OFDM symbols (symbot#0 - #5) |
| 2 | 9 OFDM symbols (symbot#0 - #8) |
| 3 | 10 OFDM symbols (symbol#0 - #9) |
| 4 | 11 OFDM symbols (symbot#0 - #10) |
| 5 | 12 OFDM symbols (symbot#0 - #11) |
| 6 | 14 OFDM symbols (symbol#0 - #13) & end of burst |
| 7 | 14 OFDM symbols (symbol#0 - #13) & not end of burst |
| If U-DCI can indicate more than 8 values | reserved |

17

[Table 1e]

| U-DCI signal value | Subframe structure (DwPTS duration) (normal CP assumed) |
|---|---|
| 0 | 0 OFDM symbol (DTX) |
| 1 | 3 OFDM symbols (symbot#0 - #2) |
| 2 | 6 OFDM symbols (symbo#0) - #5) |
| 3 | 9 OFDM symbols (symbot#0 - #8) |
| 4 | 10 OFDM symbols (symbot#0 -#9) |
| 5 | 11 OFDM symbols (symbol#0 - #10) |
| 6 | 12 OFDM symbols (symbot#0 - #11) |
| 7 | 14 OFDM symbols (symbol#0 - #13) |
| If U-DCI can indicate more than 8 values | reserved |

In yet another example, the U-DCI transmitted in subframe n indicates the subframe structures (full or DwPTS/partial subframe structure) in subframe n and subframe n+1. In such example, the U-DCI in subframe n can indicate a value according to Table 1c for subframe n and a value for subframe n+1 according to Table 1e. For certain cases, if the current subframe/partial subframe is the last subframe of a transmission burst, due to uncertainty of channel access, it may not be possible for the network to predict the subframe structure of the next subframe. In this case, if U-DCI indicates < 14 OFDM symbols (full subframe) for the current subframe n (or full subframe but is the last subframe), the bit field for the subframe structure of subframe n+1 is reserved (to maintain the same control channel size or DCI format size), and the UE may not decode it.

In such example, alternatively, the bit field for the subframe n+1 is not present. The U-DCI can be indicated from the LAA serving cell or can be indicated from another serving cell, for example, PCell or another serving cell from licensed band.

In yet another example, when the U-DCI is indicated from another serving cell, 0 OFDM symbol (DTX) can also be indicated as shown in Table 1e. If the UE is indicated with the number of OFDM symbols less than 14 for subframe n, the UE assumes subframe n is the last subframe of the transmission burst.

U-DCI indicating subframe structure can be provided/transmitted in every DL subframe (where transmission is allowed to occur e.g. subject to LBT) or it can be provided specifically indicated or predefined subframe(s) (e.g. once per burst in the first subframe of the burst, or in subframes 0 and 5). In one example, the U-DCI can be provided in any subframe or any subframe within a subset of subframes. If the UE doesn't not detect the U-DCI but there is DL transmission to be received by the UE (e.g. via blind detection of transmission such as based on the presence of CRS port 0 or port 0&1), the UE assumes a default value or a default set of values for the subframe structure.

In such example, if U-DCI is not detected, the UE may assume the current subframe is a full subframe (14 OFDM symbols transmitted for normal CP). In such example, alternatively, the UE may assume that the current subframe as well as the next subframe is full subframe. In such example, alternatively, the UE may assume that the next subframe is a full subframe. The bit field indicating the subframe structure may contain some reserved states that can be utilized to indicate new subframe structure (such as new number of OFDM symbols) in a future LTE system.

If a UE decodes the subframe structure to be of 'reserved' state (which can happen, for example, if the UE is served by a base station that supports a future LTE system), the UE may assume a default value (e.g. the default value can be the minimum OFDM symbols). The UE may not be expected to be scheduled in the subframe since the UE may not support operation based on the new number of OFDM symbols. Alternatively, the UE considers the control signaling is not decoded correctly and discards the signaling.

A support of different transmission modes or transmission schemes may be a UE capability and in addition a network may choose to only support or configure certain transmission modes. This support or configuration may be fixed for a given network, carrier, or could vary per transmission burst. In one example an indication of supported or configured TMs, or transmission schemes could be semi-statically signaled to the UEs (e.g. by RRC) or provided by system information. In another example, the supported TMs or transmission schemes could be indicated to the UE in the U-DCI. A dynamic signaling is beneficial because the dynamic signaling may provide a network flexibility to schedule different UEs in one or more bursts based on their capability. As with the subframe signaling, a set of indices may be mapped to different TMs (or transmission schemes) or set of TMs (or transmission schemes) through UE-common or UE-specific signaling. As shown in Tables 2, and Table 3A and 3B, different UEs may be configured with different TM sets to index mapping based on a higher layer configuration which can be further configured as part of the UE capability signaling.

[Table 2]

| Index | Subframe structure |
|---|---|
| 0 | TM 1-4 |
| 1 | TM 5-9 |

[Table 3a]

| Index | Subframe structure |
|---|---|
| 0 | TM 1-9 |
| 1 | TM 10 only |

[Table 3b]

| Index | Subframe structure |
|---|---|
| 0 | TM 1-4 |
| 1 | TM 5-10 |
| 2 | TM 1-10 |

In yet another example, there can also be an index to indicate the support of all transmission modes (e.g. TM1 - 10 defined in Rel-12 of LTE system) to allow for network scheduling flexibility. Given the TM configuration indicated in the UE-common or UE-specific signaling, the UE can then monitor for the DCI formats (DL assignment or UL grant) corresponding to the TM configuration. The signaling of TM or transmission scheme configuration can also implicitly indicate the presence of certain physical signals or subframe structure, e.g. CRS. For example, if a CRS-based transmission mode/scheme is indicated, then CRS is assumed to be present according to the normal or non-MBSFN subframe structure (or equivalently, the subframe structure is non-MBSFN).

In some embodiments, in addition to an indication of a subframe structure, the presence of different signals such as the CRS, CSI-RS, PRS, and/or PSS/SSS can be indicated between different possible configurations. In one example, a UE may be indicated the presence of subframes in one or more burst to assist in making CSI or RRM measurements across subframes within a burst without requiring blind detection of the signals. In addition, the signaling indicating the presence of CRS may also indicate the number of ports, for example, in the U-DCI. In another example, the signaling indicates a configuration of a physical signal such as a set of OFDM symbols containing the physical signal. In such example, a DL TTI can always contain one OFDM symbol with CRS (e.g. first OFDM symbol of the DL TTI) and the signaling indicates if there are additional OFDM symbols or which additional OFDM symbols are also mapped with CRS. A number of CRSs transmitted in the OFDM symbols may additionally be indicated (e.g. CRS-port 0 or CRS-port 0+1).

When the signal presence is indicated on subframe basis, it can be beneficial to indicate the signal presence in the upcoming subframe (e.g. the next subframe), therefore, the UE is enabled to efficiently utilize the physical signal of the next subframe for signal processing for the current subframe (e.g., interpolation for CRS based channel estimation). Moreover, the indication of physical signal presence can also indicate a transmission mode or transmission scheme supported or configured for the subframe(s) where the signaling is applicable. For example, if the CRS is indicated to be present with RE mapping according to the normal subframe or non-MBSFN subframe, the CRS based transmission modes or schemes are configured/supported; and the UEs configured with CRS-based transmission modes/schemes are required to monitor for the DCI formats for DL assignment; otherwise the UE does not need to monitor for the DCI formats for DL assignment.

Joint coding of a number of PDCCH OFDM symbols and the physical signal presence can be done using a CFI that is similar to Table 1a and Table 1b and may be extended for the CSI-RS as well, where the CSI-RS configuration may be indicated by higher layers, while the U-DCI indicates whether one or more of the configured CSI-RS are present in the subframe or transmission burst.

The presence of PSS/SSS may be closely related to whether DRS (comprised of PSS/ SSS/CRS and optionally CSI-RS) is multiplexed with a DL transmission burst inside or outside of a configured DMTC. In one example the presence of PSS/SSS may be explicitly signaled. In another example, the signaling in the U-DCI may indicate whether or not DRS is present in the subframe or burst, which implicitly indicates the presence of PSS/SSS within the subframe(s) indicated by the DRS configuration (e.g. one or multiple time positions for DRS transmission). Similar to the subframe structure signaling, U-DCI transmitted in subframe n can indicate the presence/absence of PSS/ SSS or DRS in subframe n, or the U-DCI transmitted in subframe n can indicate the presence/absence of PSS/SSS or DRS in subframe n as well as subframe n+1 (separately). In yet another example, U-DCI can indicate the presence of PSS/SSS or DRS as well as the target subframe such as subframe n or subframe n+1.

A UE on a licensed carrier may assume downlink cell-specific reference signal energy per resource element (RS EPRE) is constant across the downlink system bandwidth and constant across all subframes until different cell-specific RS power information is received. The downlink cell-specific reference-signal EPRE can be derived from the downlink reference-signal transmit power given by the parameter *referenceSignalPower* provided by higher layers. The downlink reference-signal transmit power is defined as the linear average over the power contributions (in [W]) of all resource elements that carry cell-specific reference signals within the operating system bandwidth. However, since the eNB may wish to vary the transmission power across subframes within a data burst or across bursts, the EPRE may not be constant across those subframes and dynamic signaling of the parameters related to the RS power information may be provided to the UE to assist in demodulation as well as for making CSI or RRM measurements (e.g. RSRP).

In some embodiments, a parameter *referenceSignalPower* may be indicated for a unlicensed carrier in the U-DCI or by system information message. For example, to differentiate to the parameter provided for licensed carriers a new parameter relevant for unlicensed carriers can be indicated (e.g. *referenceSignalPowerUnlicensed).* In one example, the absolute range of *referenceSignalPowerUnlicensed* may be different than *referenceSignalPower.* In another example, a value of *referenceSignalPowerUnlicensed* may be indicated as an offset from *referenceSignalPower.* In yet another example, an absolute value of *referenceSignalPowerUnlicensed* may be provided for a reference carrier indicated by dynamic or higher-layer signaling, while the RS power is indicated for the remaining carriers as an offset to the absolute power via *referenceSignalPowerUnlicensedOffset.* In yet another example, a reference power *referenceSignalPowerUnlicensed* may be provided by higher-layer signaling (e.g. RRC), while the RS power is dynamically indicated as an offset to the reference power via *referenceSignalPowerUnlicensedOffset* (such that the actual reference power is given by *referenceSignalPowerUnlicensed* (dBm) + *referenceSignalPowerUnlicensedOffset* (dB)).

A UE can use the indicated reference signal power offset to adjust the RSRP measured when compared against a configured triggering condition because a triggering condition may have been configured based on zero power offset assumption. In one example, if *referenceSignalPowerUnlicensedOffset* is signaled and applied for CRS measured which produces a RSRP/RSRQ measurement, the measurement can be adjusted according to RSRP (RSRQ) - *referenceSignalPowerUnlicensedOffset* to produce an effective RSRP (RSRQ) to be evaluated for triggering condition. The UE can still report the unadjusted RSRP (RSRQ) result, and a network can perform adjustment to obtain the effective RSRP (RSRQ). In another example, the UE can report the adjusted or effective RSRP (RSRQ) results. In yet another example, if the UE wants to average the RSRP/RSRQ measurement for CRS measured with different CRS power level applied, the UE can utilize the CRS power level indicated to perform appropriate averaging. In such examples, if the average received signal power measured at the UE for two separate measurements (RSRP1 and RSRP2) of which different offsets (Off1 and Off2) are indicated is given by (RSRP1 +Off1 + RSRP2 + Off2)/2.

In some embodiments, a reference for the RS signal power in a data burst may be a DRS transmission on one or more unlicensed carriers. For example, the parameter *referenceSignalPower* provided by RRC signaling may be the transmission power of the DRS on the given carrier and may alternatively be provided in a separate parameter such as *referenceSignalPowerDRS* (which may be semi-statically configured by RRC) and *referenceSignalPowerUnlicensedOffset* indicates the reference signal power within the transmission burst, relative to the DRS transmission power. The reference signal power may also be different for serving cell measurements or for neighboring cell measurements of the same or different operator. In one example, in addition to *referenceSignalPowerUnlicensed(Offset), referenceSignalPowerUnlicensed-Neighbor(Offset)* may also be configured by the network. In such example, the additional parameter may only apply to DRS transmissions or may additionally apply to the transmission bursts containing PSS/SSS/CRS from neighbor cells which are transmitted within a configured DMTC.

The transmission power of the DRS may be constant or varied depending on the number of carriers which are utilized for DRS transmission simultaneously. Due to regulatory or implementation constraints a total power constraint may be enforced which can mean for example if 4 carriers are utilized for the DRS transmission, the power utilized per carrier is one-fourth of the power which could be utilized for DRS transmission on a single carrier.

In one embodiment, a constant DRS transmission power is utilized which is the power utilized when the maximum number of carriers are simultaneously utilized. For example, if a total of 4 carriers can be simultaneously utilized, the DRS transmission power is indicated to be 1/4 of the total power whether or not all the carriers are actually used for a given DRS transmission. This is beneficial because the UE is allowed to know the reference signal power of the DRS every DMTC until the next configuration update (e.g. if provided by RRC or SIB). However, it may not be desirable because a coverage mismatch of the DRS and data burst may occur if the data burst used the full transmission power allowed on a carrier when fewer than the maximum number of aggregated carriers for DRS are utilized.

In another embodiment, a number of carriers utilized for DRS transmission may be indicated every DRS transmission occasion or every multiple number of DRS transmission occasions or every certain time period. If a UE is configured with a maximum DRS power level, the power per carrier can be derived assuming equal power sharing between the indicated carriers.

In yet another embodiment, multiple values of the DRS power level may be configured and/or signaled which implicitly indicate the number of carriers utilized for a given DRS occasion. In addition to assisting in demodulation and measurements at the UE, the DL reference signal power level, of the DRS for example, may be beneficial for UL transmission on an unlicensed carrier if supported. For example, the transmit power control used by the UE for UL transmissions may be based on the measured path loss (PL) based on DL signals such as the DRS. However, the UE needs the explicitly or implicitly indicated DRS power as a reference to determine the PL which is the relative difference between the indicated Tx power and the UE measured Rx power.

As aforementioned, the indicated parameters may be for the same subframe as the explicit signaling (e.g. U-DCI, or a control channel transmitted in the DRS subframe) or may also include the reference power for the previous or subsequent subframe(s). In addition the reference power may be the absolute value or may be a differential value relative to a reference power provided in the U-DCI or a higher-layer configured parameter.

For demodulating data transmissions, especially in the case when a quadrature amplitude modulation (QAM) is utilized, the relative power between reference and data signals may be known at a UE. The ratio of PDSCH EPRE to cell-specific RS EPRE among PDSCH REs (not applicable to PDSCH REs with zero EPRE) for each OFDM symbol is denoted by either $\rho_A$ or $\rho_B$ which are UE-specific. On a legacy carrier, the applicability of $\rho_A$ and $\rho_B$ varies within a subframe on a per-symbol basis and OFDM symbol indices within a slot where the ratio of the corresponding PDSCH EPRE to the cell-specific RS EPRE is denoted by either $\rho_A$ or $\rho_B$ is known at the UE based on the symbol index, a number of antenna ports, and a CP size.

The relation of $\rho_A$ to the absolute EPRE is given by $P_A$ which is also configured by higher layers. The ratio of $\rho_A$ and $\rho_B$ is indexed by $P_B$, a cell-specific parameter $P_B$ signaled by higher layers, and a number of configured eNodeB cell specific antenna ports.

In some embodiments, the values of $P_A$ and $P_B$ may be dynamically indicated to the UE instead of configured by the higher layers. For example $P_A$ and $P_B$ may be signaled in the U-DCI; this is beneficial as the UE (configured with a CRS based transmission mode) may need to be aware of $P_A$ and $P_B$ for CRS based CSI measurement even though the UE may not be scheduled in the measurement subframe.

In one example, $P_A$ and $P_B$ may be signaled in the DCI formats for DL assignment; this is beneficial if the UE (configured with a CRS based transmission mode) is only required to measure CRS based CSI in the subframe where it is also scheduled with DL assignment, or if the UE uses the dynamically signaled $P_A$ and $P_B$ for demodulation purpose, but not for CSI measurement purpose. In such example, the $P_A$ and $P_B$ assumed by the UE for CSI measurement are still given by higher layer configuration.

In another example, $P_B$ may be signaled in the U-DCI and $P_A$ may be signaled in the DCI formats for DL assignment. In yet another example, $P_A$ may be signaled in the U-DCI and $P_B$ may be signaled in the DCI formats for DL assignment. In yet another example, $P_A$ may be configured by higher layer signaling while $P_B$ may be dynamically indicated. In yet another example, $P_B$ may be configured by higher layer signaling while $P_A$ may be dynamically indicated (e.g. in DCI format for DL assignment). This is beneficial since $P_B$ may not need to be dynamically configured even though the absolute EPRE value (PDSCH and/or CRS) can be dynamically changed while $P_A$ may need to be dynamically changed to enable dynamic power control of PDSCH.

For dynamic indication of $P_A$ of a subframe (subframe n), it can also be beneficial to indicate also the ratio of the PDSCH EPRE of subframe n and the next subframe (subframe n+1)'s CRS EPRE, so that the UE can utilize the CRS of subframe n+1, for example channel estimation purpose. In addition, the ratio of the PDSCH EPRE of subframe n and the previous subframe (subframe n-1)'s CRS EPRE for similar reason. It may be noted that in the case of CSI-RS, the EPRE ratio is indicated based on the value $P_C$ and the previous alternatives may also be used to dynamically indicate the value. The value $P_C$ (or offset with respect to a configured reference value) can be included in the DCI format requesting the corresponding CSI feedback and the $P_C$. It may be noted that the range of the values of $P_A$, $P_B$, and $P_c$ can be different and independent from the values configured for carriers on licensed spectrum.

In addition, one or more possible values of the ratio of $\rho_A$ and $\rho_B$ may be fixed or configured by higher layer signaling which are independent from the values of the ratio which are used on a licensed carrier. The ratio may be indicated dynamically with the explicit signaling which may correspond the absolute value of the ratio or an index mapped to a higher layer configuration of one or more ratios as shown in Table 4.

[Table 4]

| Ratio index | $\rho_B / \rho_A$ |
|---|---|
| 0 | 1 |

(continued)

| Ratio index | $\rho_B / \rho_A$ |
|---|---|
| 1 | 4/5 |
| 2 | 3/5 |
| 3 | 2/5 |

As aforementioned, on a legacy carrier the OFDM symbol indices within a slot of a non-MBSFN subframe where the ratio of the corresponding PDSCH EPRE to the cell-specific RS EPRE is denoted by $\rho_A$ or $\rho_B$ requires the UE to know the symbol index, a number of configured antenna ports, and a CP size. If the number of antenna ports and CP size can be signaled to the UE (by dynamic or higher-layer signaling) or implicitly determined by the UE (e.g. based on subframe structure or RS presence detection) the UE may apply the fixed or configured mapping as given in Table 5.

[Table 5]

| Number of antenna ports | OFDM symbol indices within a slot where the ratio of the corresponding PDSCH EPRE to the cell-specific RS EPRE is denoted by $p_A$ | | OFDM symbol indices within a slot where the ratio of the corresponding PDSCH EPRE to the cell-specific RS EPRE is denoted by $p_B$ | |
|---|---|---|---|---|
| | Normal cyclic prefix | Extended cyclic prefix | Normal cyclic prefix | Extended cyclic prefix |
| One or two | 1, 2, 3, 5, 6 | 1, 2, 4, 5 | 0, 4 | 0, 3 |
| Four | 2, 3, 5, 6 | 2, 4, 5 | 0, 1, 4 | 0, 1, 3 |

In some embodiments, a UE may be indicated directly by a set of OFDM symbol indices corresponding to $\rho_A$ or $\rho_B$, or may be indicated an index to given set of OFDM symbol indices with the set fixed or configured by higher layer signaling as shown in Table 6.

[Table 6]

| Symbol set index | OFDM symbol indices within a slot where the ratio of the corresponding PDSCH EPRE to the cell-specific RS EPRE is denoted by $\{p_A\},\{p_B\}$ |
|---|---|
| 0 | {1, 2, 3, 5, 6}, {0, 4} |
| I | {2, 3, 5, 6}, {0, 1, 4} |
| 2 | {1, 2, 4, 5}, {0, 3} |
| 3 | {2, 4, 5}, {0, 1, 3} |

In some embodiments, a UE may just be indicated by a set of indices for $\rho_A$ or $\rho_B$ and assume that any indices not indicated are applicable for the other value. For example a UE signaled with a set of indices {1, 2, 3, 5, 6} for $\rho_A$ assumes that {0, 4} are the valid indices to apply $\rho_B$. It is noted that signaling of $P_A$ and/or $P_B$ can be optional and depend on whether the target subframe or burst for which the signaling is applied is scheduled with UEs with CRS based transmission modes or not.

In some embodiments, a UE may report the reference power and or EPRE assumption utilized when performing RRM and/or CSI measurement. This may be beneficial in the case where due to AGC, missed detection of power signaling, neighbor cell measurements, or other UE implementation aspects, there may be a potential mismatch between the UE and eNB assumptions regarding the transmission power related parameters.

Additionally, multiple CSI-RS can be transmitted within a given RRM or CSI measurement window (e.g. DMTC). For example, CSI-RS may be transmitted for channel and interference measurement within a data burst at least partially contained inside the DMTC. CSI-RS may also be transmitted within a data burst containing DRS for the purpose of channel measurement, interference measurement and/or RRM measurement. In this case, the one or more instances of the CSI-RS transmissions may have different power levels. However, for CSI-RS transmitted with DRS occasions, within the DMTC the EPRE can be kept the same as the CSI-RS configured for RRM. The benefit of this approach is that it allows reuse of CSI-RS resources for both RRM and CSI measurement. This can also apply when multiple CSI-RS are transmitted within the same downlink data transmission burst outside of the DMTC.

A UE may be configured with one or more measurement restriction patterns for RRM and CSI measurements which indicate subframes where the UE is allowed to perform the configured measurements. A semi-static pattern may be beneficial for a licensed carrier due to signaling efficiency, however on an unlicensed carrier, due to variable channel access opportunities subject to LBT and more dynamically fluctuating interference scenarios, it is desirable to indicate the measurement restriction configurations on a per-burst or even per-subframe basis. In one example, the U-DCI may indicate for corresponding subframe whether a measurement restriction(s) of a given type is applied. In another example the U-DCI may indicate for a corresponding transmission burst which subframes correspond to a given measurement restriction configuration/type. This indication may include a signaled pattern (e.g. bitmap corresponding to the subframes in the burst) or may be an index for one or more configured patterns (e.g. patterns 0 and 1 are configured a subframe bitmaps by RRC, and the U-DCI indicates an index corresponding the pattern 0 or pattern 1).

In some embodiments, control information of transmission parameters can be carried using a PHICH or PHICH-like physical channel on an unlicensed carrier. A transmission parameter can be mapped/configured (by RRC) to a PHICH resource (identified by the index pair $\left(n_{PHICH}^{group}, n_{PHICH}^{seq}\right)$ where $n_{PHICH}^{group}$ is the PHICH group number and $n_{PHICH}^{seq}$ is the orthogonal sequence index within the group), and there can be 2 or up to 8 possible configurations for each PHICH resource (3-bit codeword per resource). One or more PHICH group numbers and one or more the orthogonal sequence indices within the group to be detected/received by the UE can be configured by RRC, e.g. as part of LAA SCell configuration.

In some embodiments, control information of transmission parameters can be carried by reusing the bit field for "UL/DL configuration" with DCI format 1C, where the CRC is scrambled with an enhanced interference mitigation traffic adaptation-RNTI (eimta-RNTI) or a new RNTI. In one example, the "UL/DL configuration" field is reused to indicate subframe structure, e.g. as in Table 1c or Table 1d or Table 1e. A U-DCI can be transmitted in each LAA SCell configured, for example, a common search is configured for each LAA SCell (with eimta-UL-DL-ConfigIndex=1). Alternatively, the U-DCI is transmitted from a serving cell from a licensed band, or from a PCell, or from a serving cell configured with a common search space. An eimta-UL-DL-ConfigIndex can be extended from Rel-12 value range (1...5) of LTE system to enable signaling for more SCells.

Many of the aforementioned signaling may be valid on a per-subframe or per-DL transmission burst basis. In the case where the signaled transmission parameters are varying across bursts, it may be important for the UE to determine whether two different transmissions from the same cell are contained within the same transmission burst, or are part of a different transmission burst. In one example, a UE may determine whether subframes are belonging to the same burst based on a time-continuous detection and measurement of the transmissions of a cell. If maximum burst duration is also fixed, a UE may determine any subframes received with a greater latency than the maximum duration may correspond to different bursts. In another example, a network may provide assistance to the UE making the determination. In yet another example, a burst index may be provided by explicit or implicit signaling (e.g. U-DCI). In yet another example, maximum burst duration may be indicated to the UE (by higher-layer or physical layer (e.g. U-DCI) signaling.

In some embodiments, parameters may be implicitly derived at the UE for dynamically adapting the transmission parameters within or across DL data bursts. In one embodiment, a scrambling utilized on the reference signals such as the CRS and/or CSI-RS may indicate one or more parameters or combination of parameters. For example, in Rel-8-12 of LTE system, the CRS sequence $r_{l,n_s}(m)$ is defined in accordance with equation (1):

$$r_{l,n_s}(m) = \frac{1}{\sqrt{2}}\left(1 - 2\cdot c(2m)\right) + j\frac{1}{\sqrt{2}}\left(1 - 2\cdot c(2m+1)\right), \quad m = 0,1,...,2N_{RB}^{\max,DL} - 1 \quad (1)$$

where $n_s$ is the slot number within a radio frame and $i$ is the OFDM symbol number within the slot. The pseudo-random sequence $c(i)$ is defined in the specification of LTE system. The pseudo-random sequence generator may be initialized in accordance with equation (2):

$$c_{init} = 2^{10}\cdot\left(7\cdot\left(n_s + 1\right) + l + 1\right)\cdot\left(2\cdot N_{ID}^{cell} + 1\right) + 2\cdot N_{ID}^{cell} + N_{CP} \quad (2)$$

The equation (2) is defined at the start of each OFDM symbol, where

$$N_{CP} = \begin{cases} 1 & \text{for normal CP} \\ 0 & \text{for extended CP} \end{cases}$$

In one embodiment, transmission parameters can be implicitly determined by $n_s$ (instead of indicating the slot number as per Rel-8-12 of LTE system). For example, $n_s$ can be used to indicate the subframe type as shown in Table 7a and Table 7b. Other choices of $n_s$ values used for mapping to configuration information are also possible. Since subframe type can be applied to both slots of a subframe, one $n_s$ value is applied to both slots of the subframe. When the UE needs to determine the subframe type of a DL subframe, the UE blindly detects the $n_s$ value of the subframe to determine the subframe type (e.g. according Table 7a or Table 7b).

[Table 7a]

| $n_s$ | Subframe type |
|---|---|
| 0 | Normal DL subframe (non-MBSFN subframe) |
| 1 | MBSFN subframe |
| 2 | Reduced CRS subframe |
| ... | ... |
| 19 | Reserved |

[Table 7b]

| $n_s$ | Subframe type |
|---|---|
| 0 | Normal DL subframe (non-MBSFN subframe) |
| 1 | MBSFN subframe |
| 2<br>3 | Partial subframe type 1<br>Partial subframe type 2 (not applicable if only one type of partial subframe is defined) |
| ... | ... |
| 19 | Reserved |

In one example of Table 7a, since CRS is present in the first OFDM symbol for all the subframe types, a UE can uses the CRS of the first OFDM symbol for the detection purpose. Since the subframe type is determined by the presence of CRS in the other OFDM symbols, the UE can still blindly detect the presence of CRS in the other OFDM symbol locations to confirm the UE's blind detection result. In another example, the UE can utilize blind detection of CRS signal presence in the OFDM symbols as well as blind detection of $n_s$ jointly to determine the subframe type. Such operation can also be performed based on, for example, Table 7b. In such example, the CRS may not be present in the first part of a subframe because of partial subframe (e.g. transmission occurs from the 2nd slot of a subframe).

A UE can perform the blind detection every subframe of a DL transmission burst if the subframe type can change every subframe, which provides more flexibility for a network at the cost of increased UE blind detection. If the network maintains the same subframe type for the whole of transmission burst, the UE can perform such blind detection only one time during the burst (e.g. in the first subframe of the burst); however, the UE may still perform detection in more than one times during the burst to confirm the detection result and to improve detection reliability.

Table 8a and Table 8b show some examples of using $n_s$ to indicate the support or configuration of transmission mode and transmission scheme for a subframe, respectively. Since support of transmission mode/scheme is applied to both slots of a subframe, one $n_s$ value is applied to both slots of the subframe. When a UE needs to determine the transmission mode/scheme configured/supported of a DL subframe, the UE blindly detects the $n_s$ value, for example according to Table 8a or Table 8b. Design principles described for subframe type indication can be reused for transmission mode/scheme indication and further description is omitted here for brevity.

[Table 8a]

| $n_s$ | Transmission modes |
|---|---|
| 0 | CRS-based transmission modes (e.g. one or more of TM1, TM2, TM3, TM4, TM5, TM6) |
| 1 | DM-RS based transmission modes (e.g. one or more of TM7, TM8, TM9, TM10) |
| 2 | reserved |
| ... | ... |
| 19 | reserved |

[Table 8b]

| $n_s$ | Transmission schemes |
|---|---|
| 0 | CRS-based transmission schemes [3] (e.g. port 0 single antenna port scheme, transmit diversity scheme, large delay CDD scheme, closed-loop spatial multiplexing scheme, multi-user MIMO scheme) |
| 1 | DM-RS based transmission schemes [3] (e.g. port 5, port 7, port 8 single antenna port scheme, dual layer scheme, up to 8 layer transmission scheme) |
| 2 | reserved |
| ... | |
| 19 | reserved |

Table 9a and Table 9b show some examples of using $n_s$ to indicate the CRS and CSI-RS signal presence for a subframe, respectively. Other physical signals can also be indicated using the same scheme. One $n_s$ value is applied to both slots of the subframe. When a UE needs to determine the physical signal presence of a DL subframe, the UE blindly detects the $n_s$ value, for example according to Table 9a or Table 9b. $n_s$ can also jointly indicate the presence of CRS and CSI-RS as shown in Table 9c. Design principles described for subframe type indication can be reused for CRS/CSI-RS and further description is omitted here for brevity.

[Table 9a]

| $n_s$ | Signal presence |
|---|---|
| 0 | CRS is present according to RE mapping for normal subframe (non-MBSFN subframe) |
| 1<br>2 | CRS is present according to RE mapping for MBSFN subframe<br>reserved |
| ... | |
| 19 | reserved |

[Table 9b]

| $n_s$ | Signal presence |
|---|---|
| 0 | CSI-RS according to RRC configuration is not present in the subframe |
| 1 | CSI-RS according to RRC configuration is present in the subframe |
| 2 | reserved |
| ... | |
| 19 | reserved |

[Table 9c]

| $n_s$ | CRS signal presence | CSI-RS signal presence |
|---|---|---|
| 0 | CRS is present according to RE mapping for normal subframe (non-MBSFN subframe) | CSI-RS according to RRC configuration is not present in the subframe |
| 1 | CRS is present according to RE mapping for MBSFN subframe | CSI-RS according to RRC configuration is not present in the subframe |
| 2 | CRS is present according to RE mapping for normal subframe (non-MBSFN subframe) | CSI-RS according to RRC configuration is present in the subframe |
| 3 | CRS is present according to RE mapping for MBSFN subframe | CSI-RS according to RRC configuration is present in the subframe |
| ... | ... | ... |
| 19 | Reserved | |

Table 10a and Table 10b show some examples of using $n_s$ to indicate the CRS power level (EPRE dBm) and CRS power level offset (dB) with respect to a reference signal power (e.g. configured by RRC or broadcast) for a subframe, respectively. When a UE needs to determine the CRS power configured of a DL subframe, for example, for RRM measurement or for determining UL transmit power as aforementioned above, the UE blindly detects the $n_s$ value for example, according to Table 10a or Table 10b. Indicating the signal power with a parameter in the CRS scrambling function has the benefit that RRM measurement of neighboring cells can be performed more efficiently than the scheme involving decoding of a physical channel to obtain the information.

[Table 10a]

| $n_s$ | Reference signal power level (EPRE dBm) |
|---|---|
| 0 | Reference signal power level 1 (e.g. -60) |
| 1 | Reference signal power level 2 (e.g. -55) |
| 2 | Reference signal power level 3 (e.g. -50) |
| ... | ... |
| 19 | Reference signal power level 20 (e.g. 35) |

[Table 10b]

| $n_s$ | Reference signal power offset (dB) |
|---|---|
| 0 | Reference signal power offset 1 (e.g. -3) |
| 1 | Reference signal power offset 2 (e.g. -6) |
| 2 | Reference signal power offset 3 (e.g. -9) |
| ... | ... |
| 19 | reserved |

Table 11a and Table 11b show some examples of using $n_s$ to indicate $P_B$ and $P_A$ for a subframe, respectively. If $n_s$ is used to indicate $P_B$, for example according to Table 11a, $P_A$ can be indicated in the DCI format for DL assignment since $P_A$ is typically determined in a UE-specific manner. If $n_s$ is used to indicate $P_A$, for example according to Table 11b, $P_B$ can be indicated by higher layer signaling (e.g. RRC) or by a broadcast message. In one example, there can be joint indication of $P_B$ and $P_A$ by $n_s$.

[Table 11a]

| $n_s$ | $P_B$ |
|---|---|
| 0 | 0 |

(continued)

| $n_s$ | $P_B$ |
|---|---|
| 1 | 1 |
| 2 | 2 |
| 3 | 3 |
| 4 | reserved |
| ... | ... |
| 19 | reserved |

[Table 11b]

| $n_s$ | $P_A$ |
|---|---|
| 0 | -6dB |
| 1 | -4.77dB |
| 2 | -3dB |
| 3 | -1.77 |
| 4 | 0 |
| 5 | 1 |
| 6 | 2 |
| 7 | 3 |
| 8 | reserved |
| ... | ... |
| 19 | reserved |

Although the parameter $n_s$ has been used to describe various examples of indication above, other parameters can also be used without departing from the scope of the invention. Other parameters used for CRS scrambling can also be reused for the purpose of indicating transmission parameters if the original purposes of the parameters are not necessary or beneficial, e.g. $l$ which is originally the OFDM symbol number within the slot (scrambling randomization over time is not essential if e.g. cell id based randomization is sufficient), and $N_{CP}$, which is originally determined by the cyclic prefix configuration (extend cyclic prefix is not beneficial for typical deployment scenarios of small cells; hence normal cyclic prefix is sufficient). In another example, one or more of the parameters $n_s$, $l$, $N_{CP}$ can jointly indicate one or more of the transmission parameters.

In some embodiments, transmission parameters can be implicitly determined by a new parameter introduced in a scrambling of CRS/CSI-RS. For example, an m-bit parameter M can be introduced to initialize the pseudo-random sequence generator for CRS sequence in accordance with equation (3):

$$c_{\text{init}} = 2^{10+m} \cdot M + 2^{10} \cdot \left(7 \cdot (n_s + 1) + l + 1\right) \cdot \left(2 \cdot N_{\text{ID}}^{\text{cell}} + 1\right) + 2 \cdot N_{\text{ID}}^{\text{cell}} + N_{\text{CP}} \quad (3)$$

where M parameter can be used to indicate transmission parameters as described for the example of $N_S$ above.

In some embodiments, the presence of a signal (e.g. CRS, CSI-RS, DRS) may be used to convey one or more parameters or combination of parameters. For example, the absence of CRS in OFDM symbols other than the first (port 0 and port 1) or first two (port 0, 1, 2, 3) OFDM symbols can indicate that DM-RS based on transmission mode/scheme is configured or supported for PDSCH, but not CRS-based transmission mode/scheme for PDSCH.

In some embodiments, a combination of explicit and implicit control information could also be utilized. For example CRS scrambling could be utilized to indicate the EPRE parameters used for the given subframe, while TM support or the reference signal power could be indicated in the U-DCI.

It is possible that a transmit power of CRS and/or CSI-RS (not part of DRS) are maintained the same by an eNodeB per transmission burst but can be varied between two different bursts. In this way, a UE may assume that the CRS and/or CSI-RS EPREs, which are not part of DRS, do not change within a transmission burst and can use the physical signals across subframes, for example for channel estimation (e.g. interpolation across subframes) and fine frequency synchronization purpose.

It is also possible that a transmit power of CRS and/or CSI-RS as part of DRS has to be maintained the same by an eNodeB for much longer duration to in order to minimize impact to RRM measurement procedure. In this case, a UE may assume that the CRS and/or CSI-RS EPREs, which are part of DRS, do not change within DRS subframes and across DRS subframes. The UE can average RRM measurements based on DRS (CRS based or CSI-RS based RSRP/RSRQ) across DRS occasions. Moreover, control/data transmission and DRS transmission can be multiplexed within the same transmission burst and even the same subframe. In this case, there is a need for the UE to distinguish when the CRS and/or CSI-RS transmit power can change within a transmission burst.

In some embodiments, a UE may not assume the CRS/CSI-RS transmitted outside of DMTC window/occasion and the CRS/CSI-RS transmitted within the DMTC window/ occasion have the same EPRE. This assumption applies even when the control/data transmission burst overlaps in time with the DMTC window/occasion. In an option for this method, if the UE is configured with the possible DRS transmission locations (e.g. subframes) within the DMTC window/occasion, then the UE may not assume the CRS/CSI-RS transmitted outside of the configured locations within DMTC window/ occasion and the CRS/CSI-RS transmitted in the configured locations within DMTC window/occasion have the same EPRE.

In some embodiments, a signaling can be used to indicate which subframe(s) within a DMTC window/occasion have different CRS/CSI-RS EPRE than those for the other subframes within the transmission burst overlapping with the DMTC window/ occasion. If there are 5 possible DRS subframes within the DMTC window/occasion and there can only be one DRS subframe within the DMTC window/occasion, 3 bits can be used for such signaling. The EPRE difference between the two kinds of subframes (or the EPRE ratio) can also be indicated.

If the EPRE of CRS of DRS is given by RRC configuration (*referenceSignalPower*), the signaling essentially indicates the EPRE of the CRS not part of DRS. Alternatively, the signaling does not indicate which subframes within the DMTC window/occasion have different CRS/CSI-RS EPRE; a UE assumes that different EPRE is applied to all or a configured set of subframes within the DMTC window/occasion. Alternatively, the signaling can also indicate the EPRE difference or EPRE ratio between the current subframe (where the signaling is transmitted) and the next subframe.

In some embodiments, a signaling only indicates there is a change in EPRE but does not indicate actual EPRE to save signaling overhead. The signaling can be done with U-DCI and depending on the signaling content design, can be transmitted, for example in the first subframe of a transmission burst, or in every subframe of a transmission burst, or in a configured set of subframes of a transmission burst. The signaling may not be needed for a transmission burst if the signaling does not overlap with a DMTC window/occasion.

In some embodiments, a signaling can be transmitted in the subframes (or a configured set of subframes) of DMTC window/occasion. In some embodiments, a signaling can be transmitted in the subframe before the start of DMTC window/ occasion and the last subframe of a DMTC window/occasion. In some embodiments, a signaling can be transmitted in the subframes before the configured sets of subframes of the DMTC window/occasion as well as in the configured sets of subframes of the DMTC window/occasion. In some embodiments, an implicit signaling with using parameters used for CRS/CSI-RS scrambling can also be used.

In some embodiments, a UE determines which subframe within a DMTC window/ occasion may contain CRS/CSI-RS with different EPRE through detection of DRS (PSS/SSS). The UE may not assume the CRS/CSI-RS in subframe not containing DRS has the same EPRE as the CRS/CSI-RS in subframe containing DRS.

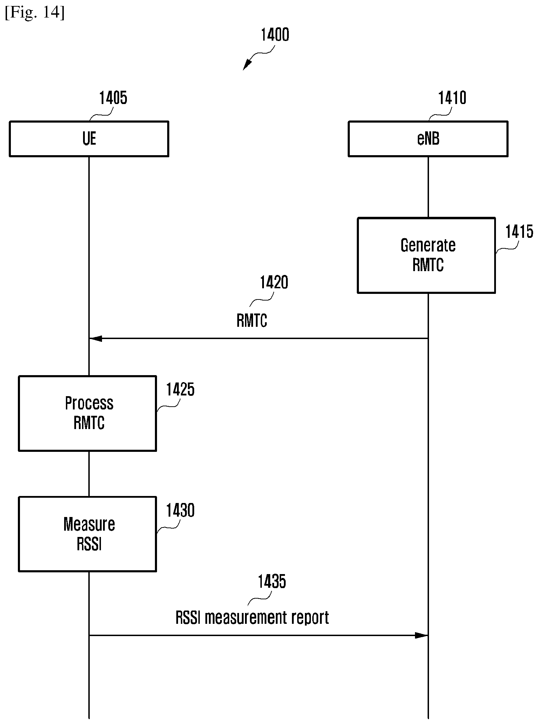

FIGURE 14 illustrates an example of signaling flow for RSSI transmission 1400 on unlicensed spectrum according to embodiments of the present disclosure. An embodiment of the signaling flow for RSSI transmission 1400 shown in FIGURE 14 is for illustration only. Other embodiments may be used without departing from the scope of the present disclosure.

As shown in FIGURE 14, the signaling flow for the RSSI transmission 1400 comprises a UE 1405 and an eNB 1410. At step 1415, the eNB 1410 may generate a received signal strength indicator (RSSI) measurement timing configuration (RMTC). At step, 1420, the eNB 1415 may transmit the RMTC generated at the step 1415 to the UE 1405 over an unlicensed spectrum in a licensed assisted access (LAA). In some embodiments, the eNB 1410 may transmit, at step 1420, at least one threshold to the UE 1405 for the average RSSI measurement of the UE 1405 at step 1430. In some embodiments, the RMTC, at step 1420, is independently configured from a discovery reference signal (DRS) measurement timing configuration (DMTC).

The RMTC transmitted at step 1420 may comprise a duration and measurement period that determines a time period between the average RSSI measurements of the UE 1405 at step 1430. In some embodiments, the eNB 1410 may transmit, at step 1420, OFDM symbol information for performing the average RSSI measurement of the UE 1405 at step 1430, wherein the OFDM symbol information may be indicated, at step 1420, by a higher layer signal to the UE 1405.

In some embodiments, the eNB 1410 may generate, at step 1415, a value indicating a subframe structure configuration for transmitting a downlink control channel and may transmit, at step 1420, the value indicating the subframe structure configuration, wherein the value indicating the subframe structure configuration comprises at least one of a value indicating a partial subframe duration configuration or a value indicating a full subframe duration configuration, and wherein the value indicating the subframe structure configuration is configured by downlink control information (DCI) format to the UE 1405.

At step 1425, the UE 1405 may receive, at step 1420, the RMTC over an unlicensed spectrum in a licensed assisted access (LAA) and process the RMTC transmitted at step 1425. At step 1430, the UE 1405 may measure RSSI in accordance with RMTC transmitted at step 1420 and generate an average RSSI measurement in accordance with the received RMTC. In some embodiments, the UE 1405 may generate, at step 1430, a channel occupancy measurement report including a channel occupancy ratio, wherein the channel occupancy ratio is determined based on an amount of occupied measurement time unit (MTU) exceeding at least one threshold for the average RSSI measurement, and wherein the at least one threshold is configured by a higher layer signal from the eNB 1410. At step 1435, the UE 1405 may transmit, to the eNB 1410, the channel occupancy measurement report with an RSSI measurement report including the average RSSI measurement.

None of the description in this application should be read as implying that any particular element, step, or function is an essential element that must be included in the claim scope. The scope of patented subject matter is defined only by the claims.

## Claims

1. A method of a user equipment, UE (116), in a wireless communication system using an unlicensed band, the method comprising:

    receiving, from an eNodeB, eNB (102), information on a received signal strength indicator, RSSI, measurement timing configuration, RMTC;;
    performing a measurement on the unlicensed band according to the information on the RMTC; and
    transmitting, to the eNB (102), a measurement report including at least one of average RSSI information and channel occupancy information.

2. A method of an eNodeB, eNB (102), in a wireless communication system using an unlicensed band, the method comprising:

    transmitting, to a user equipment, UE (116), information on a received signal strength indicator, RSSI, measurement timing configuration, RMTC, and
    receiving, from the UE (116), a measurement report including at least one of average RSSI information and channel occupancy information, and
    wherein the measurement report is generated based on a measurement on the unlicensed band according to the information on the RMTC.

3. The method of claim 1 or 2, wherein the information on the RMTC includes measurement duration information and periodicity information.

4. The method of claim 1 or 2, wherein the channel occupancy information indicates a percentage of time that an RSSI was above a threshold value.

5. The method of claim 4, wherein the threshold value is configured by a radio resource control, RRC, signaling.

6. The method of claim 1 or 2, wherein the RMTC is configured independently from a discovery reference signal, DRS, measurement timing configuration.

7. The method of claim 2, further comprising:
performing sensing a channel for transmitting a DRS based on a threshold value, wherein the threshold value for the DRS is higher than a threshold value for transmitting data.

8. The method of claim 7, wherein the DRS transmission is performed based on a fixed backoff value.

9. A user equipment, UE (116), for use in a wireless communication system using an unlicensed band, the UE (116) comprising:

a transceiver (310); and
a controller (340) coupled with the transceiver (310) and configured to control to:

receive, from an eNodeB, eNB (102), information on a received signal strength indicator, RSSI, measurement timing configuration, RMTC,
perform a measurement on the unlicensed band according to the information on the RMTC, and
transmit, to the eNB (102), a measurement report including at least one of average RSSI information and channel occupancy information.

10. An eNodeB, eNB (102), for use in a wireless communication system using an unlicensed band, the eNB comprising:

a transceiver (210); and
a controller (225) coupled with the transceiver and configured to control to:

transmit, to a user equipment, UE (116), information on a received signal strength indicator ,RSSI, measurement timing configuration, RMTC, and
receive, from the UE (116), a measurement report including at least one of average RSSI information and channel occupancy information, and
wherein the measurement report is generated based on a measurement on the unlicensed band according to the information on the RMTC.

11. The UE (116) of claim 9 or the eNB of claim 10, wherein the information on the RMTC includes measurement duration information and periodicity information.

12. The UE (116) of claim 9 or the eNB of claim 10, wherein the channel occupancy information indicate a percentage of time that an RSSI was above a threshold value, and
wherein the threshold value is configured by a radio resource control, RRC, signaling.

13. The UE (116) of claim 9 or the eNB of claim 10, wherein the RMTC is configured independently from a discovery reference signal, DRS, measurement timing configuration.

14. The eNB (102) of claim 10, wherein the controller is further configured to control to perform sensing a channel for transmitting a DRS based on a threshold value,
wherein the threshold value for the DRS is higher than a threshold value for transmitting data.

15. The eNB (102) of claim 10, wherein the DRS transmission is performed based on a fixed backoff value.

**Patentansprüche**

1. Verfahren eines Benutzergeräts, UE (116), in einem drahtlosen Kommunikationssystem unter Verwendung eines unlizenzierten Bands, das Verfahren umfassend:

Empfangen von einem eNodeB, eNB (102), von Informationen über eine Messzeitkonfiguration, RMTC, eines Indikators der empfangenen Signalstärke, RSSI,
Ausführen einer Messung auf dem unlizenzierten Band gemäß den Informationen auf der RMTC; und
Senden, an den eNB (102), eines Messberichts, der mindestens eines von durchschnittlichen RSSI-Informationen und Informationen zur Kanalbelegung beinhaltet.

2. Verfahren eines eNodeB, eNB (102), in einem drahtlosen Kommunikationssystem unter Verwendung eines unlizenzierten Bands, das Verfahren umfassend:

Senden, an ein Benutzergerät, UE (116), von Informationen über eine Messzeitkonfiguration, RMTC, eines Indikators der empfangenen Signalstärke, RSSI, und
Empfangen, von dem UE (116), eines Messberichts, der mindestens eines von durchschnittlichen RSSI-Informationen und Kanalbelegungsinformationen beinhaltet, und

wobei der Messbericht basierend auf einer Messung auf dem unlizenzierten Band gemäß den Informationen auf der RMTC erzeugt wird.

3. Verfahren nach Anspruch 1 oder 2, wobei die Informationen über die RMTC Informationen über die Messdauerinformationen und Messhäufigkeitsinformationen beinhalten.

4. Verfahren nach Anspruch 1 oder 2, wobei die Kanalbelegungsinformationen einen Prozentsatz von Zeit angibt, in der ein RSSI über einem Schwellenwert war.

5. Verfahren nach Anspruch 4, wobei der Schwellenwert durch eine Signalisierung einer Funkressourcensteuerung, RRC, konfiguriert wird.

6. Verfahren nach Anspruch 1 oder 2, wobei die RMTC unabhängig von einer Messzeitkonfiguration eines Entdeckungsreferenzsignals, DRS, konfiguriert ist.

7. Verfahren nach Anspruch 2, ferner umfassend:
Ausführen eines Abtasten eines Kanals zum Senden eines DRS basierend auf einem Schwellenwert, wobei der Schwellenwert für das DRS höher ist als ein Schwellenwert zum Senden von Daten.

8. Verfahren nach Anspruch 7, wobei das DRS-Senden basierend auf einem festen Backoff-Wert ausgeführt wird.

9. Benutzergerät, UE (116), zur Verwendung in einem drahtlosen Kommunikationssystem unter Verwendung eines unlizenzierten Bands, das UE (116) umfassend:

einen Sendeempfänger (310); und
eine Steuerung (340), die mit dem Sendeempfänger (310) gekoppelt und zu Folgendem konfiguriert ist:

Empfangen, von einem eNodeB, eNB (102), von Informationen über eine Messzeitkonfiguration, RMTC, eines Indikators der empfangenen Signalstärke, RSSI,
Ausführen einer Messung auf dem unlizenzierten Band gemäß den Informationen über die RMTC, und
Senden, an den eNB (102), eines Messberichts, der mindestens eines von durchschnittlichen RSSI-Informationen und Informationen zur Kanalbelegung beinhaltet.

10. eNodeB, eNB (102), zur Verwendung in einem drahtlosen Kommunikationssystem unter Verwendung eines unlizenzierten Bands, der eNB umfassend:

einen Sendeempfänger (210); und
eine Steuerung (225), die mit dem Sendeempfänger gekoppelt und konfiguriert ist, um Folgendes zu steuern:

Senden, an ein Benutzergerät UE (116), von Informationen über eine Messzeitkonfiguration, RMTC, eines Indikators der empfangenen Signalstärke, RSSI, Messzeitkonfiguration, RMTC, und
Empfangen von dem UE (116), eines Messberichts, der mindestens eines von durchschnittlichen RSSI-Informationen und Informationen zur Kanalbelegungsinformationen beinhaltet, und
wobei der Messbericht basierend auf einer Messung auf dem unlizenzierten Band gemäß den Informationen auf der RMTC erzeugt wird.

11. UE (116) nach Anspruch 9 oder eNB nach Anspruch 10, wobei die Informationen über die RMTC über die Messdauerinformationen und Messhäufigkeitsinformationen beinhalten.

12. UE (116) nach Anspruch 9 oder eNB nach Anspruch 10, wobei die Kanalbelegungsinformationen einen Prozentsatz von Zeit angibt, in der ein RSSI über einem Schwellenwert war, und
wobei der Schwellenwert durch eine Signalisierung einer Funkressourcensteuerung, RRC, konfiguriert ist.

13. UE (116) nach Anspruch 9 oder eNB nach Anspruch 10, wobei die RMTC unabhängig von einer Messzeitkonfiguration eines Entdeckungsreferenzsignals, DRS, konfiguriert ist.

14. ENB (102) nach Anspruch 10, wobei die Steuerung ferner konfiguriert ist, um zu steuern, um ein Abtasten eines Kanals zum Senden eines DRS basierend auf einem Schwellenwert auszuführen,

wobei der Schwellenwert für das DRS höher ist als ein Schwellenwert zum Senden von Daten.

**15.** eNB (102) nach Anspruch 10, wobei die DRS-Sendung basierend auf einem festen Backoff-Wert ausgeführt wird.

## Revendications

**1.** Procédé d'un équipement utilisateur UE (116), dans un système de communication sans fil utilisant une bande non soumise à licence, le procédé comprenant :

la réception, en provenance d'un nœud b évolué eNB (102), des informations sur une configuration de temporisation de mesure RMTC d'indicateur de puissance de signal reçu RSSI, la réalisation d'une mesure sur la bande non soumise à licence selon les informations sur le RMTC ; et
l'émission, vers l'eNB (102), d'un rapport de mesure comprenant au moins l'une des informations RSSI moyennes et des informations d'occupation de canal.

**2.** Procédé d'un nœud b évolué eNB (102), dans un système de communication sans fil utilisant une bande non soumise à licence, le procédé comprenant :
l'émission, vers un équipement utilisateur UE (116), d'informations sur une configuration de temporisation de mesure RMTC d'indicateur de puissance de signal reçu RSSI et la réception, en provenance de l'UE (116), d'un rapport de mesure comprenant au moins l'une des informations RSSI moyennes et des informations d'occupation de canal, et ledit rapport de mesure étant généré sur la base d'une mesure sur la bande non soumise à licence selon les informations sur le RMTC.

**3.** Procédé selon la revendication 1 ou 2, lesdites informations sur le RMTC comprenant des informations de durée de mesure et des informations de périodicité.

**4.** Procédé selon la revendication 1 ou 2, lesdites informations d'occupation de canal indiquant un pourcentage de temps pendant lequel un RSSI était au-dessus d'une valeur seuil.

**5.** Procédé selon la revendication 4, ladite valeur seuil étant configurée par une signalisation de commande de ressource radio RRC.

**6.** Procédé selon la revendication 1 ou 2, ledit RMTC étant configuré indépendamment d'une configuration de temporisation de signal de référence de découverte DRS.

**7.** Procédé selon la revendication 2, comprenant en outre :
la réalisation de la détection d'un canal pour émettre un DRS sur la base d'une valeur seuil, ladite valeur seuil pour le DRS étant supérieure à une valeur seuil pour l'émission de données.

**8.** Procédé selon la revendication 7, ladite émission DRS étant effectuée sur la base d'une valeur de réduction de puissance fixe.

**9.** Équipement utilisateur UE (116), destiné à être utilisé dans un système de communication sans fil utilisant une bande non soumise à licence, l'UE (116) comprenant : un émetteur-récepteur (310) ; et
un dispositif de commande (340) couplé à l'émetteur-récepteur (310) et configuré pour commander de : recevoir, en provenance d'un nœud b évolué eNB (102), des informations sur une configuration de temporisation de mesure RMTC d'indicateur de puissance de signal reçu RSSI ;
effectuer une mesure sur la bande non soumise à licence selon les informations sur le RMTC, et émettre, à l'eNB (102), un rapport de mesure comprenant au moins l'une des informations RSSI moyennes et des informations d'occupation de canal.

**10.** Nœud b évolué eNB (102) destiné à être utilisé dans un système de communication sans fil utilisant une bande non soumise à licence, l'eNB comprenant :

un émetteur-récepteur (210) ; et
un dispositif de commande (225) couplé à l'émetteur-récepteur et configuré pour commander de : émettre, vers un équipement utilisateur UE (116), des informations sur une configuration de temporisation de mesure RMTC d'indicateur d'intensité de signal reçu RSSI, et recevoir, en provenance de l'UE (116), un rapport de mesure comprenant au moins l'une des informations RSSI moyennes et des informations d'occupation de canal, et ledit rapport de mesure étant généré sur la base d'une mesure sur la bande non soumise à licence selon les informations sur le RMTC.

11. UE (116) selon la revendication 9 ou eNB selon la revendication 10, lesdites informations sur le RMTC comprenant des informations de durée de mesure et des informations de périodicité.

12. UE (116) selon la revendication 9 ou eNB selon la revendication 10, lesdites informations d'occupation de canal indiquant un pourcentage de temps pendant lequel un RSSI était au-dessus d'une valeur seuil, et ladite valeur seuil étant configurée par une signalisation de commande de ressource radio RRC.

13. UE (116) selon la revendication 9 ou eNB selon la revendication 10, ledit RMTC étant configuré indépendamment d'une configuration de temporisation de mesure de signal de référence de découverte DRS.

14. eNB (102) selon la revendication 10, ledit dispositif de commande étant en outre configuré pour commander d'effectuer la détection d'un canal pour émettre un DRS sur la base d'une valeur seuil, ladite valeur seuil pour le DRS étant supérieure à une valeur seuil pour émettre des données.

15. eNB (102) selon la revendication 10, ladite émission DRS étant effectuée sur la base d'une valeur de réduction de puissance fixe.

[Fig. 1]

[Fig. 2]

[Fig. 3]

116

[Fig. 4a]

[Fig. 4b]

[Fig. 5]

[Fig. 6]

[Fig. 7]

700

710
Licensed spectrum

720
Unlicensed spectrum

| PCell (Uplink) | PCell (Downlink) | SCell (Downlink) | SCell (Uplink) |

730

[Fig. 8]

800

850
LTE-U on-off cycle

P-ON

P-OFF

820

840

830

time

[Fig. 9]

[Fig. 10]

EP 3 281 350 B1

43

[Fig. 11]

EP 3 281 350 B1

1100

DMTC occasion

1106a

1106b

DMTC Period (1107)

Occasion moved due to LBT (1106c)

LAA Cell 1 (1105)

DRS occasion

data

dropped due to LBT (1111b)

LAA Cell 2 (1110)

1111a

1111c

Wi-Fi AP (1115)

1116a

1116b

1116c

1116d

1116e

time

[Fig. 12]

DMTC Period
(1207)

DMTC occasion

dropped due to LBT
(1206b)

Aperiodic DRS
(1208)

1200

LAA Cell 1
(1205)

1206a

Wi-Fi AP
(1215)

1216a

1216b

time

EP 3 281 350 B1

45

[Fig. 13]

[Fig. 14]

1400

1405

| UE |

1410

| eNB |

| Generate RMTC | 1415

1420

RMTC

| Process RMTC | 1425

| Measure RSSI | 1430

1435

RSSI measurement report

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2016123025 A

- EP 1944984 A

### Non-patent literature cited in the description

- E-UTRA, Physical channels and modulation" (REF1). *3GPP TS 36.211 v12.3.0*
- E-UTRA, Multiplexing and Channel coding" (REF2). *3GPP TS 36.212 v12.2.0*
- E-UTRA, Physical Layer Procedures" (REF3). *3GPP TS 36.213 v12.3.0*
- Small cell enhancements for E-UTRA and E-UTRAN - Physical layer aspects"(REF4). *3GPP TR 36.872 v12.1.0*

- E-UTRA, Requirements for support of radio resource management" (REF5). *3GPP TS 36.133 v12.7.0*
- E-UTRA, Radio Resource Control (RRC) Protocol Specification. *3GPP TS 36.331 v12.3.0*
- Broadband Radio Access Networks (BRAN); 5GHz high performance RLAN. *ETSI EN 301 893 v1.8.0 (2012-06), Harmonized European Standard,* June 2012